(19) Europäisches Patentamt
European Patent Office
Office européen des brevets

(11) **EP 2 273 853 A1**

(12) **EUROPEAN PATENT APPLICATION**
published in accordance with Art. 153(4) EPC

(43) Date of publication:
**12.01.2011 Bulletin 2011/02**

(51) Int Cl.:
**H05B 41/18** (2006.01)

(21) Application number: **09735745.3**

(22) Date of filing: **06.04.2009**

(86) International application number:
**PCT/JP2009/057059**

(87) International publication number:
**WO 2009/130994 (29.10.2009 Gazette 2009/44)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **24.04.2008 JP 2008114635**
**24.04.2008 JP 2008114636**
**24.04.2008 JP 2008114637**

(71) Applicant: **Panasonic Electric Works Co., Ltd**
**Kadoma-shi**
**Osaka 571-8686 (JP)**

(72) Inventors:
• **MATSUZAKI, Nobutoshi**
**Kadoma-shi**
**Osaka 571-8686 (JP)**

• **KAMOI, Takeshi**
**Kadoma-shi**
**Osaka 571-8686 (JP)**
• **GORIKI, Takeshi**
**Kadoma-shi**
**Osaka 571-8686 (JP)**
• **YAMAHARA, Daisuke**
**Kadoma-shi**
**Osaka 571-8686 (JP)**

(74) Representative: **Appelt, Christian W.**
**Forrester & Boehmert**
**Pettenkoferstrasse 20-22**
**80336 München (DE)**

(54) **HIGH VOLTAGE DISCHARGE LAMP LIGHTING DEVICE AND LIGHT FIXTURE**

(57) The high pressure discharge lamp lighting apparatus (10) includes a power circuit (20, 30, 40, and 50) and a starting circuit (60). The power circuit (20, 30, 40, and 50) includes a pair of output terminals (55 and 56) adapted to be respectively connected to a pair of electrodes (91 and 92) of a high pressure discharge lamp (90). The power circuit (20, 30, 40, and 50) is configured to apply an AC voltage for keeping the high pressure discharge lamp (90) turned on across the pair of the output terminals (55 and 56). The starting circuit (60) is configured to apply a starting pulse voltage across the pair of the electrodes (91 and 92) of the high pressure discharge lamp (90). The starting circuit (60) is configured to have output characteristics of increasing the starting pulse voltage with an increase of a length of a pair of output wires (83) used with connection of the high pressure discharge lamp (90), and of decreasing the starting pulse voltage when the length of the pair of the output wires (83) exceeds a certain value.

*FIG. 1*

**Description**

**Technical Field**

The present invention is directed to a high pressure discharge lamp lighting apparatus and a lighting fixture.

**Background Art**

In the past, there has been a lighting fixture configured to turn on a high pressure discharge lamp. The high pressure discharge lamp is also referred to as a HID (High Intensity Discharge) lamp.

The aforementioned lighting fixture includes a high pressure discharge lamp lighting apparatus, and a main fixture body configured to carry the high pressure discharge lamp lighting apparatus.

As disclosed in Japanese patent laid-open publication No. 63-150891, the high pressure discharge lamp lighting apparatus is configured to turn on a high pressure discharge lamp by use of an AC power received from an external AC source (e.g. commercial AC source).

The high pressure discharge lamp lighting apparatus includes a diode bridge, a boost chopper circuit, a step-down chopper circuit, a polarity reversion circuit, a starting circuit, and a control circuit, for example.

The diode bridge is configured to perform full-wave rectification on an AC voltage of the AC source.

The boost chopper circuit is configured to increase an output voltage of the diode bridge up to a predetermined value.

The step-down circuit is configured to decrease an output voltage of the boost chopper circuit down to a predetermined value.

The polarity reversion circuit is configured to convert an output voltage of the step-down chopper circuit into a square wave AC voltage of which polarity is reversed at a predetermined frequency, and apply the resultant square wave AC voltage across a pair of electrodes of the high pressure discharge lamp.

The control circuit is configured to control individually the boost chopper circuit, the step-down chopper circuit, and the polarity reversion circuit.

The starting circuit is configured to apply a starting pulse voltage across the pair of the electrodes of the high pressure discharge lamp to cause a dielectric breakdown of the high pressure discharge lamp in order to start the high pressure discharge lamp. The starting pulse voltage is a high pulse voltage having a relatively high voltage. For example, the starting circuit comprises a pulse transformer.

In the above lighting fixture, the high pressure discharge lamp is connected to the high pressure discharge lamp lighting apparatus by use of a pair of output wires, generally. For example, when the pair of the output wire has a length of a few meters, a stray capacitance generated across the output wires in the pair increases to a negligible extent. Especially, when two output wires are arranged in parallel with each other in a similar manner as seen in a VVF cable, the capacitance between the two output wires becomes considerably large. For example, with respect to a VVF cable, the capacitance per meter is 80pF. Therefore, when the VVF cable has a length of 10m, the capacitance is 800pF.

The capacitance developed across the pair of the output wires affects on the pulse voltage applied across the pair of the electrodes of the high pressure discharge lamp. In other words, the starting pulse voltage has a lower voltage (peak voltage) as the output wire is extended (the capacitance developed across the pair of the output wires becomes larger).

In the conventional high pressure discharge lamp lighting apparatus, the starting pulse voltage monotonically lowers as the output wire extends (the capacitance between the output wires in the pair increases). Therefore, the length of the output wire is likely to cause a failure of starting the high pressure discharge lamp.

In order to avoid the failure of starting the high pressure discharge lamp, the starting pulse voltage may be selected to be sufficiently high for applying a proper voltage through the relatively long output wires. For example, the starting pulse voltage can increase by an increase of a turn ratio of the pulse transformer of the starting circuit.

However, when the output wire is relatively short, with an increase of the turn ratio of the pulse transformer of the starting circuit, the starting pulse voltage becomes excessively high. When the pulse voltage is varied corresponding to the length of the output wire, a timing at which the high pressure discharge lamp is turned on is also varied.

**Disclosure of Invention**

In view of the above insufficiency, the present invention has been aimed to propose a high pressure discharge lamp lighting apparatus and a lighting fixture capable of reducing an influence of a pair of output wires used for connection of the high pressure discharge lamp.

The high pressure discharge lamp lighting apparatus in accordance with the present invention includes a power circuit and a starting circuit. The power circuit includes a pair of output terminals adapted to be respectively connected to a pair of electrodes of a high pressure discharge lamp. The power circuit is configured to apply an AC voltage for keeping the high pressure discharge lamp turned on across the pair of the output terminals. The starting circuit is configured to apply a starting pulse voltage across the pair of the electrodes of the high pressure discharge lamp. The starting circuit is configured to have output characteristics of increasing the starting pulse voltage with an increase of a length of a pair of output wires used with connection of the high pressure discharge lamp, and of decreasing the starting pulse voltage when the length of the pair of the output wires exceeds a certain value.

According to the present invention, in contrast to a situation where the starting pulse value voltage monotonically decreases as the length of the output wire increases in a similar manner as seen in the conventional art, it is possible to decrease a width of variation in the starting pulse voltage caused by varying the length of the output wire. Therefore, it is possible to reduce an influence caused by the output wires. Thus, the high pressure discharge lamp can be turned on even if the pair of the output wires is relatively long. Additionally, it is possible to prevent the starting pulse value from becoming excessively high even if the pair of the output wires is relatively short.

In a preferred embodiment, the starting circuit includes a pulse transformer. The starting circuit is configured to apply, across the pair of the electrodes of the high pressure discharge lamp, a secondary voltage of the pulse transformer as the starting pulse voltage. The secondary voltage is obtained when a primary voltage of the pulse transformer is equivalent to a predetermined value. The pulse transformer is configured to have a turn ratio and a coupling coefficient selected such that the starting circuit has the output characteristics.

In a more preferred embodiment, the high pressure discharge lamp lighting apparatus is configured to satisfy the following formula when N1 denotes the number of turns of a primary coil of the transformer, and N2 denotes the number of turns of a secondary coil of the transformer, and Vpm denotes a central value of a range of a specified value of the starting pulse voltage necessitated for starting the high pressure discharge lamp, and VN1 denotes the predetermined value.

[Formula 1]

$$\frac{N2}{N1} < \frac{Vpm}{VN1}$$

In a furthermore preferred embodiment, the high pressure discharge lamp lighting apparatus is configured to satisfy the following formula when Cx denotes capacitance of a capacitive component considered to be connected in parallel with the primary coil of the pulse transformer, and LL denotes a leakage inductance of the pulse transformer, and T denotes a time necessitated for increasing the primary voltage from 0 to the predetermined value during a starting period of the high pressure discharge lamp.

[Formula 2]

$$T > \frac{1}{2}\pi\sqrt{LL \times Cx}$$

In a preferred embodiment, the starting circuit includes a pulse transformer, and a parallel capacitor connected across a primary coil of the pulse transformer. The starting circuit is configured to apply, across the pair of the electrodes of the high pressure discharge lamp, a secondary voltage of the pulse transformer as the starting pulse voltage. The secondary voltage is obtained when a primary voltage of the pulse transformer is equivalent to a predetermined value. The parallel capacitor is configured to have a capacitance selected such that the starting circuit has the output characteristics.

In a more preferred embodiment, the high pressure discharge lamp lighting apparatus is configured to satisfy the following formula when Cp denotes capacitance of the parallel capacitor, and Cx denotes capacitance of a virtual capacitor which is connected in series with the parallel capacitor and in parallel with the primary coil of the pulse transformer, and which is an equivalent circuit of a capacitive component across the pair of the output wires having the shortest length within a usable range, and LL denotes a leakage inductance of the pulse transformer, and T denotes a time necessitated for increasing the primary voltage from 0 to the predetermined value during a starting period of the high pressure discharge lamp.

[Formula 3]

$$T > \frac{1}{2}\pi\sqrt{LL \times \left(\frac{Cx \times Cp}{Cx + Cp}\right)}$$

In a preferred embodiment, the starting circuit includes a pulse transformer. The starting circuit is configured to apply, across the pair of the electrodes of the high pressure discharge lamp, a secondary voltage of the pulse transformer as the starting pulse voltage. The secondary voltage is obtained when a primary voltage of the pulse transformer is equivalent to a predetermined value. The high pressure discharge lamp lighting apparatus includes a voltage increasing means. The voltage increasing means is configured to increase the primary voltage of the pulse transformer to adjust a time for increasing the primary voltage from 0 to the predetermined value such that the starting circuit has the output characteristics.

In a more preferred embodiment, the voltage increasing means includes a variable impedance circuit connected in series with a primary coil of the pulse transformer, and a control circuit configured to control the variable impedance circuit. The control circuit is configured to control the variable impedance circuit to adjust the time for increasing the primary voltage from 0 to the predetermined value such that the starting circuit has the output characteristics.

In a more preferred embodiment, the power circuit includes a DC power circuit configured to output a DC current, and an inverter circuit of a full-bridge type composed of electric field effect transistors. The inverter circuit is configured to convert the DC current obtained from the DC power circuit into a square wave AC current of which polarity is reversed at a predetermined frequency, and provide the resultant square wave AC current to the high pressure discharge lamp and a primary coil of the pulse transformer. The voltage increasing means includes a control circuit configured to control the electric field effect transistor of the inverter circuit. The control circuit is configured to gradually increase a voltage applied to a gate of the electric field effect transistor in order to adjust the time for increasing the primary voltage from 0 to the predetermined value such that the starting circuit has the output characteristics.

In a more preferred embodiment, the high pressure discharge lamp lighting apparatus is configured to satisfy the following formula when Cx denotes capacitance of a capacitive component considered to be connected in parallel with a primary coil of the pulse transformer, and LL denotes a leakage inductance of the pulse transformer, and T denotes a time necessitated for increasing the primary voltage from 0 to the predetermined value during a starting period of the high pressure discharge lamp.

[Formula 4]

$$T > \frac{1}{2}\pi\sqrt{LL \times Cx}$$

In a preferred embodiment, the starting circuit is configured to, while the pair of the output wires has a length within a usable range, output the starting pulse voltage exceeding a starting voltage of the high pressure discharge lamp.

In a more preferred embodiment, the starting circuit is designed such that a difference between the starting pulse voltage output when the pair of the output wires has the shortest length within the usable range and the starting pulse voltage output when the pair of the output wires has the longest length within the usable range does not exceed 500V.

With this arrangement, in contrast to a situation where the difference between the starting pulse voltage obtained when the length of the pair of the output wires is the shortest value and the starting pulse voltage obtained when the length of the pair of the output wires is the longest value exceeds 500V, it is possible to decrease the variation range of the starting pulse voltage with relation to the length of the pair of the output wires within the usable range.

In a preferred embodiment, the starting circuit is designed such that the certain value is not greater than the shortest length of the pair of the output wires within a usable range.

With this arrangement, the starting pulse voltage successfully has the maximum value when the length of the pair of the output wires is the shortest value within the usable range. In addition, the starting pulse voltage successfully has the minimum value when the length of the pair of the output wires is the longest value within the usable range. Therefore, in contrast to a situation where the certain value falls within the usable range, it is easy to obtain both the minimum value and the maximum value of the starting pulse voltage.

The lighting fixture in accordance with the present invention includes a high pressure discharge lighting apparatus and a main fixture body configured to carry the high pressure discharge lamp lighting apparatus. The high pressure discharge lamp lighting apparatus in accordance with the present invention includes a power circuit and a starting circuit. The power circuit includes a pair of output terminals adapted to be respectively connected to a pair of electrodes of a high pressure discharge lamp. The power circuit is configured to apply an AC voltage for keeping the high pressure discharge lamp turned on across the pair of the output terminals. The starting circuit is configured to apply a starting pulse voltage across the pair of the electrodes of the high pressure discharge lamp. The starting circuit is configured to have output characteristics of increasing the starting pulse voltage with an increase of a length of output wires used for connection of the high pressure discharge lamp, and of decreasing the starting pulse voltage when the length of the pair of the output wires exceeds a certain value.

According to the present invention, in contrast to a situation where the starting pulse voltage monotonically decreases as the length of the output wire increases in a similar manner as seen in the conventional art, it is possible to decrease a width of variation in the starting pulse voltage caused by varying the length of the output wire. Therefore, it is possible to reduce an influence caused by the output wires. Thus, the high pressure discharge lamp can be turned on even if the pair of the output wires is relatively long. Additionally, it is possible to prevent the starting pulse value from becoming excessively high even if the pair of the output wires is relatively short.

**Brief Description of Drawings**

FIG. 1 is a circuit block diagram illustrating a high pressure discharge lamp lighting apparatus of a first embodiment,
FIG. 2 is a schematic view illustrating a lighting fixture including the above high pressure discharge lamp lighting apparatus,
FIG. 3 is an explanatory view illustrating operation of the above high pressure discharge lamp lighting apparatus,
FIG. 4 is a graph illustrating a relation between a length of output wires and a starting pulse voltage,
FIG. 5 is a graph illustrating a relation between the length of output wires and the starting pulse voltage,
FIG. 6 is a graph illustrating a relation between the length of output wires and the starting pulse voltage.
FIG. 7 is a graph illustrating a relation between the length of output wires and the starting pulse voltage,
FIG. 8 is a graph illustrating a relation between the length of output wires and the starting pulse voltage,
FIG. 9 is an explanatory view illustrating operation of the high pressure discharge lamp lighting apparatus of the first embodiment,
FIG. 10 is a graph illustrating a relation between the length of output wires and the starting pulse voltage,
FIG. 11 is a graph illustrating a relation between the length of output wires and a fundamental oscillation voltage,
FIG. 12 is a graph illustrating a relation between the length of output wires and a parasitic oscillation voltage,
FIG. 13 is a circuit block diagram illustrating a high pressure discharge lamp lighting apparatus of a third embodiment,
FIG. 14 is an explanatory view illustrating operation of the above high pressure discharge lamp lighting apparatus,
FIG. 15 is a graph illustrating a relation between the length of output wires and the starting pulse voltage with relation to the above high pressure discharge lamp lighting apparatus,
FIG. 16 is a circuit block diagram illustrating a primary part of a high pressure discharge lamp lighting apparatus of a fourth embodiment,
FIG. 17 is an explanatory view illustrating operation of the above high pressure discharge lamp lighting apparatus,
FIG. 18 is an explanatory view illustrating operation of the above high pressure discharge lamp lighting apparatus,
FIG. 19 is a graph illustrating a relation between a wiring capacitance and both the starting pulse voltage and a parasitic pulse voltage,
FIG. 20 is a graph illustrating a relation between the wiring capacitance and both the starting pulse voltage and the parasitic pulse voltage,
FIG. 21 is a graph illustrating a relation between the wiring capacitance and both the starting pulse voltage and the parasitic pulse voltage,
FIG. 22 is a graph illustrating a relation between the wiring capacitance and both the starting pulse voltage and the parasitic pulse voltage,
FIG. 23 is a graph illustrating a relation between the wiring capacitance and both the starting pulse voltage and the parasitic pulse voltage,
FIG. 24 is a graph illustrating a relation between the wiring capacitance and both the starting pulse voltage and the parasitic pulse voltage,
FIG. 25 is an explanation view illustrating operation of a polarity reversion drive unit of the above high pressure discharge lamp lighting apparatus,
FIG. 26 is a circuit block diagram illustrating a primary part of a modification of the above high pressure discharge lamp lighting apparatus,
FIG. 27 is an explanatory view illustrating operation of the modification of the above high pressure discharge lamp lighting apparatus,
FIG. 28 is a circuit block diagram illustrating a primary part of a high pressure discharge lamp lighting apparatus of a fifth embodiment, and
FIG. 29 is an explanatory view illustrating the above high pressure discharge lamp lighting apparatus.

**Best Mode for Carrying Out the Invention**

**(first embodiment)**

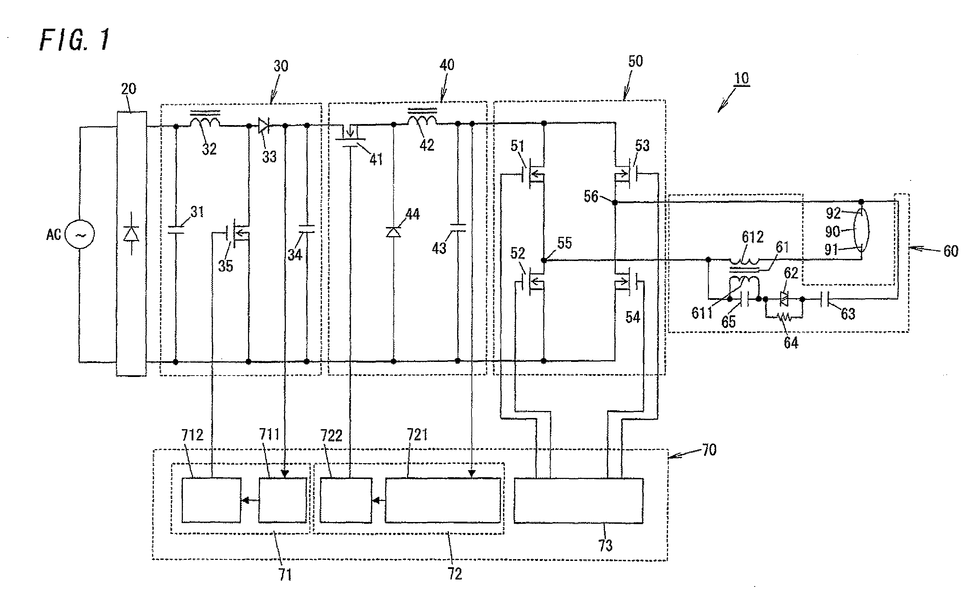

As shown in FIG. 1, the high pressure discharge lamp lighting apparatus **10** of the present embodiment is configured to turn on a high pressure discharge lamp **90** by use of a power obtained from an external AC source **AC.**

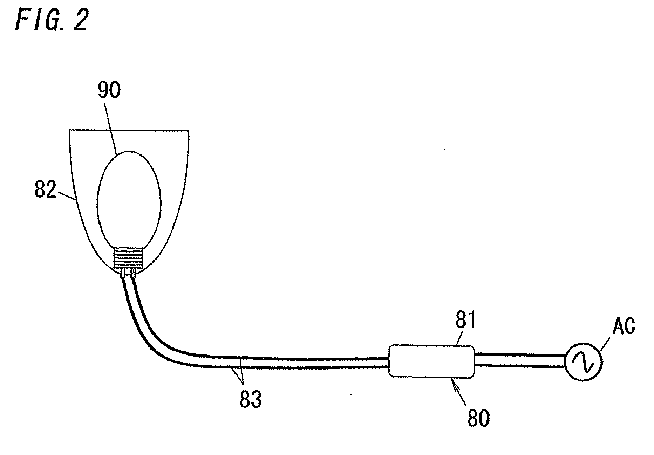

The high pressure discharge lamp lighting apparatus **10** is used in a lighting fixture 80 show in FIG.2, for example. The lighting fixture **80** includes a main fixture body **81** configured to house and carry the high pressure discharge lamp lighting apparatus **10,** and a light body **82** configured to carry the high pressure discharge lamp **90.** The high pressure discharge lamp **10** is electrically connected to the high pressure discharge lamp **90** through a pair of output wires **83.** For example, the output wire **83** is a VVF cable.

The high pressure discharge lamp lighting apparatus **10** includes a rectification circuit **20,** a boost chopper circuit **30,** a step-down chopper circuit **40,** a polarity reversion circuit **50,** a starting circuit **60,** and a control circuit **70.**

The rectification circuit **20** is configured to perform full-wave rectification on an AC voltage (input voltage) of the AC source **AC.** The rectification circuit **20** comprises a diode bridge, for example.

The boost chopper circuit **30** is configured to increase an output voltage of the rectification circuit **20** and output the resultant output voltage. The boost chopper circuit **30** is a well known circuit, and is also referred to as a boost converter. The boost chopper circuit **30** includes an input capacitor **31,** an inductor **32,** a diode **33,** an output capacitor **34,** and a switching element **35.** The input capacitor **31** is connected across output terminals of the rectification circuit **20.** The inductor **32** has its one end connected to the output terminal of a high voltage side of the rectification circuit **20.** The diode **33** has its anode connected to the other end of the inductor **32.** The output capacitor **34** has its one end connected to a cathode of the diode **33,** and has its other end connected to the output terminal of a low voltage side of the rectification circuit **20.** The switching element **35** has its one end connected to a junction of the inductor **32** and the diode **33,** and has its other end connected to a junction of the rectification circuit **20** and the output capacitor **34.** Both ends of the output capacitor **34** define output terminals of the boost chopper circuit **30,** respectively.

The step-down chopper circuit **40** is configured to decrease an output voltage of the boost chopper circuit **30** and output the resultant output voltage. The step-down chopper circuit **40** is a well known circuit, and is also referred to as a back converter. The step-down chopper circuit **40** includes a switching element **41,** an inductor **42,** an output capacitor **43,** and a diode **44.**

The switching element **41,** the inductor **42,** and the output capacitor **43** constitute a series circuit. The series circuit is connected across the output terminals of the boost chopper circuit **30.** The diode **44** has its anode connected to a junction of the output capacitor **43** and the output terminal of a low voltage side of the boost chopper circuit **30.** The diode **44** has its cathode connected to a junction of the switching element **41** and the inductor **42.** Both ends of the output capacitor **43** define output terminals of the step-down chopper circuit **30,** respectively.

The polarity reversion circuit **50** is configured to convert the output voltage of the step-down chopper circuit **40** into an AC voltage (square wave AC voltage of which polarity is reversed at a predetermined frequency). The polarity reversion circuit **50** includes four switching elements **51** to **54.** The switching elements **51** and **52** and the switching elements **53** and **54** constitute series circuits, respectively. These two series circuits are connected in parallel with each other. The two series circuits connected in parallel with each other are connected across the output terminals of the step-down chopper circuit **40.** In the polarity reversion circuit **50,** a junction of the switching elements **51** and **52** is defined as one output end (first output end) **55,** and a junction of the switching elements **53** and **54** is defined as another output end (second output end) **56.** The switching elements **51** to **54** are electric field effect transistors. In other words, the polarity reversion circuit **50** comprises an inverter circuit of a full-bridge type composed of electric field effect transistors.

The rectification circuit **20,** the boost chopper circuit **30,** and the step-down chopper circuit **40** constitute a DC power circuit configured to output a DC current.

In addition, the polarity reversion circuit **50** is configured to convert the DC current obtained from the DC power circuit into a square wave AC current of which polarity is reversed at the predetermined frequency, and provide the resultant square wave AC current to the high pressure discharge lamp **90** and a primary coil **611** of a pulse transformer **61** of the starting circuit **60.**

Consequently, with respect to the high pressure discharge lamp lighting apparatus **10,** the DC power circuit and the polarity reversion circuit **50** constitute a power circuit for keeping the high pressure discharge lamp **90** turned on.

The control circuit **70** is configured to control individually the boost chopper circuit **30,** the step-down chopper circuit **40,** and the polarity reversion circuit **50.** The control circuit **70** includes a boost control unit **71,** a step-down control unit **72,** and a polarity reversion drive unit **73.**

The boost control unit **71** includes a boost detection unit **711** configured to measure the output voltage of the boost chopper circuit **30,** and a boost drive unit **712** configured to turn on and off the switching element **35.** The boost drive unit **712** turns on and off the switching element **35** according to a duty ratio which is selected such that the output voltage measured by the boost detection unit **711** is equivalent to a predetermined target value.

The step-down control unit **72** includes a step-down detection unit **721** configured to measure the output voltage of the step-down chopper circuit **40,** and a step-down drive unit **722** configured to turn on and off the switching element **41.** The step-down drive unit **722** turns on and off the switching element **41** in accordance with a duty ratio corresponding to the output voltage measured by the step-down detection unit **721.** Additionally, the step-down drive unit **722** is configured to judge, on the basis of the output voltage measured by the step-down detection unit **721,** whether or not the high pressure discharge lamp **90** is kept turned on. Upon determining that the high pressure discharge lamp **90** is not kept turned on, the step-down drive unit **722** increases the output voltage of the step-down chopper **40** to a level higher than the output voltage output that is given when the step-down drive unit **722** determines that the high pressure discharge lamp **90** is kept turned on.

The polarity reversion drive unit **73** is configured to output drive signals to the switching elements **51** to **54,** respectively. Upon receiving the drive signal having a high level, the switching element turns on. Upon receiving the drive signal having a low level, the switching element turns off. The polarity reversion drive unit **73** outputs the drive signal to each of the switching elements **51** to **54** so as to simultaneously or synchronously turn on and off the switching elements **51** to **54** arranged diagonally with each other, and to alternately turn on and off the switching elements **51** to **54** connected in series with each other. In other words, the polarity reversion drive unit **73** selects alternately a condition where the switching elements **51** and **54** are kept turned on and the switching elements **52** and **53** are kept turned off and a condition where the switching elements **52** and **53** are kept turned on and the switching elements **51** and **54** are kept turned off.

Since the control circuit **70** can be realized by means of conventional techniques, no detailed explanation and drawing thereof are deemed necessary.

The starting circuit **60** is configured to provide a starting pulse voltage (hereinafter referred to as "starting pulse") to the high pressure discharge lamp **90.** In the high pressure discharge lamp **10,** a second end of a secondary coil **612** and the second output end **56** of the polarity reversion circuit **50** are connected to one electrode (first electrode) **91** and another electrode (second electrode) **92** of the high pressure discharge lamp **90** by use of the output wires **83,** respectively. Therefore, the starting circuit **60** is interposed between the polarity reversion circuit **50** and the high pressure discharge lamp **90.** The starting circuit **60** includes the aforementioned pulse transformer **61** acting as a boost transformer, a switching element **62,** a series capacitor **63,** a resistor **64,** and a parallel capacitor **65.**

The secondary coil **612** of the pulse transformer **61** has its first end connected to the first output end **55** of the polarity reversion circuit **50.** The primary coil **611** of the pulse transformer **61** has its first end connected to the first end of the secondary coil **612.** The primary coil **611** has its second end connected to the second output end **56** of the polarity reversion circuit **50** via the series circuit **63** and a parallel circuit of the switching element **62** and the resistor **64.** The switching element **62** is a two-terminal bi-directional thyristor. Therefore, when a voltage $V62$ across the switching element **62** exceeds a break-over voltage (on voltage), the switching element **62** is turned on.

The series capacitor **63,** the switching element **62,** and the resistor **64** constitute a voltage generation unit configured to apply a voltage (primary voltage) $V611$ across the primary coil **611** of the pulse transformer **61** during a starting period of the high pressure discharge lamp **90.**

The starting circuit **60** is configured to apply, across the pair of the electrodes **91** and **92** of the high pressure discharge lamp **90,** a secondary voltage $V612$ as the starting pulse voltage. With this situation, the secondary voltage $V612$ is obtained when the primary voltage $V611$ of the pulse transformer **61** is equivalent to a predetermined value (peak voltage of the primary voltage $V611$) $VN1$.

The parallel capacitor **65** is connected in parallel with the primary coil **611** of the pulse transformer **61.** Besides, the parallel capacitor **65** has a capacitance $C65$ greater than both a stray capacitance $C611$ of the primary coil **611** and a stray capacitance $C612$ of the secondary coil **612** of the pulse transformer **61.**

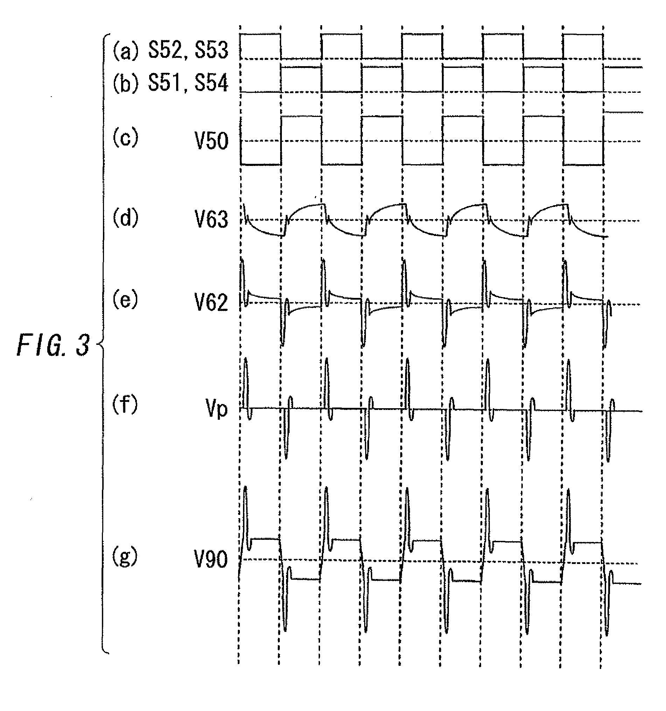

Besides, the parallel capacitance **65** is provided in order to improve a starting performance of the high pressure discharge lamp **90.** With reference to FIG. 3, an explanation is made to operation of the high pressure discharge lamp lighting apparatus **10** without the parallel capacitor **65.** In FIG. 3, (a) shows the drive signals $S52$ and $S53$ respectively output to the switching elements **52** and **53.** In FIG. 3, (b) shows the drive signals $S51$ and $S54$ respectively output to the switching elements **51** and **54.** In FIG. 3, (c) shows an output voltage $V50$ of the polarity reversion circuit **50.** In FIG. 3, (d) shows a voltage (charging voltage) $V63$ developed across the series capacitor **63.** In FIG. 3, (e) shows the voltage $V62$ applied across the switching element **62.** In FIG. 3, (f) shows a value (hereinafter referred to as "starting pulse value") $Vp$ of the starting pulse. In FIG. 3, (g) shows a voltage (hereinafter referred to as "lamp voltage") $V90$ applied across the pair of the electrodes **91** and **92** of the high pressure discharge lamp **90.** In FIG. 3, lateral axes of respective (a) to (g) represent time.

In the starting period, the series capacitor **63** is charged by a current which flows through the resistor **64** and the primary coil **611** of the pulse transformer **61.** In this situation, the voltage **V62** is kept not greater than the break-over voltage of the switching element **62.** Therefore, the switching element **62** is kept turned off. Meanwhile, when the polarity is reversed in the polarity reversion circuit **50,** a voltage, which is a sum of the output voltage **V50** of the polarity reversion circuit **50** and the charging voltage **V63** of the series capacitor **63,** is applied across the switching element **62.** Therefore, the switching element **62** is turned on, and then the primary coil **611** of the pulse transformer **61** receives a voltage. Thereby, the secondary voltage **V612** is induced across the secondary coil **612** of the pulse transformer **61.** As a result, the starting pulse is applied across the pair of the electrodes **91** and **92** of the high pressure discharge lamp **90,** and then the high pressure discharge lamp **90** starts to operate (starts to emit light).

A frequency **f1** of a main component of the starting pulse is a resonant frequency of a resonant circuit constituted by the series capacitor **63,** the primary coil **611,** and the output capacitor **43.** Frequency **f1** is represented by the following formula (1), wherein **L611** denotes an inductance of the primary coil **611,** and **C63** denotes a capacitance of the series capacitor **63,** and **C43** denotes a capacitance of the output capacitor **43.**

[Formula 5]

$$f1 = \frac{1}{2\pi\sqrt{L611\times\left(\dfrac{C43\times C63}{C43+C63}\right)}} \qquad (1)$$

The lamp voltage **V90** includes a component having a high frequency relative to the frequency **f1**. When the lamp voltage **V90** sees a high frequency, there arises a shortage of a period in which a sufficiently high voltage is applied across the pair of the electrodes **91** and **92** of the high pressure discharge lamp **90** for starting the same. In this situation, the starting trouble of the high pressure discharge lamp **90** is likely to occur. The above high frequency may occur due to the stray capacitances **C611** and **C612** respectively corresponding to the coils **611** and **612** of the pulse transformer **61.** Thus, the starting circuit **60** is provided with the parallel capacitor **65** in order to reduce the component of the high frequency and improve the starting performance of the high pressure discharge lamp **90.**

The feature of the high pressure discharge lamp lighting apparatus **10** resides in that the starting circuit **60** has output characteristics (hereinafter referred to as "mountain-shaped output characteristics") having a mountain shape of increasing the starting pulse value **Vp** (raising the starting pulse) with an increase of the length **L** of output wires **83** (hereinafter referred to as "output wire length"), and of decreasing the starting pulse value **Vp** (lowering the starting pulse) when the output wire length **L** exceeds a certain value. In other words, given the starting pulse value **Vp** as a function of the output wire length **L,** the function has a local maximum point. At the local maximum point, the output wire length **L** is equivalent to the certain value and the starting pulse value **Vp** is equivalent to the local maximum value (peak value).

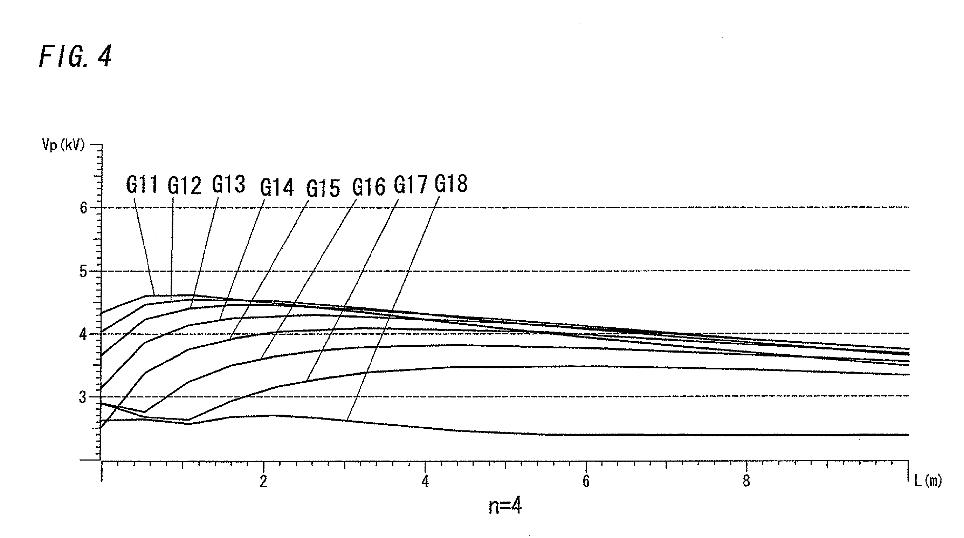

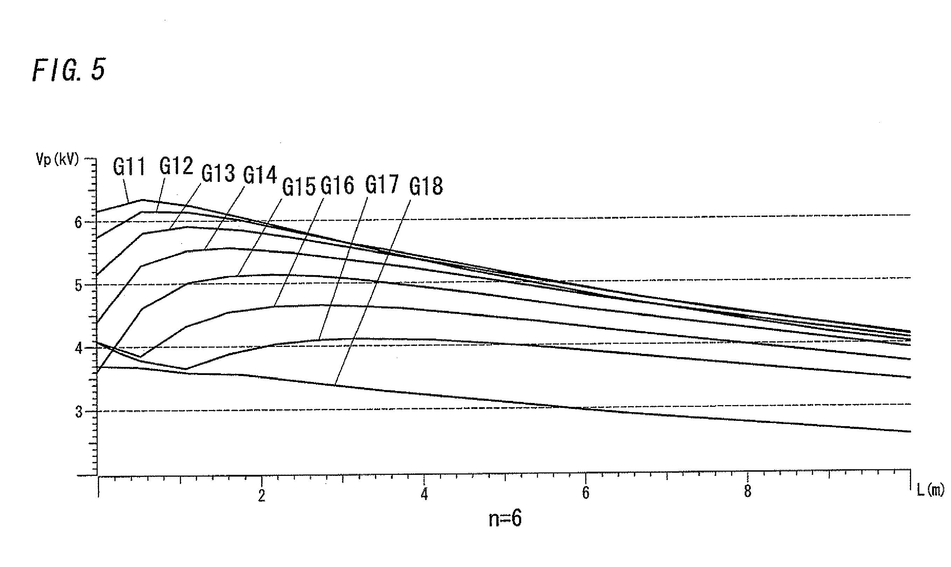

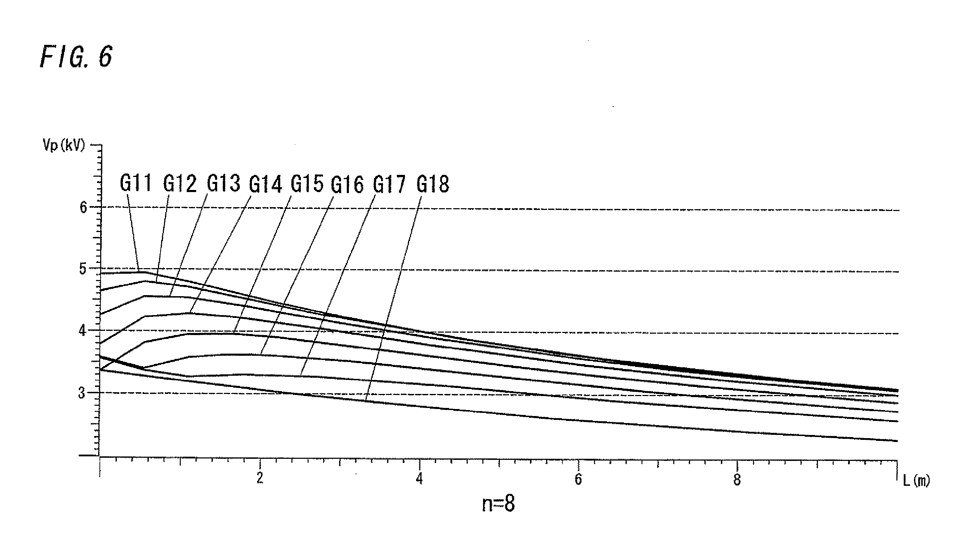

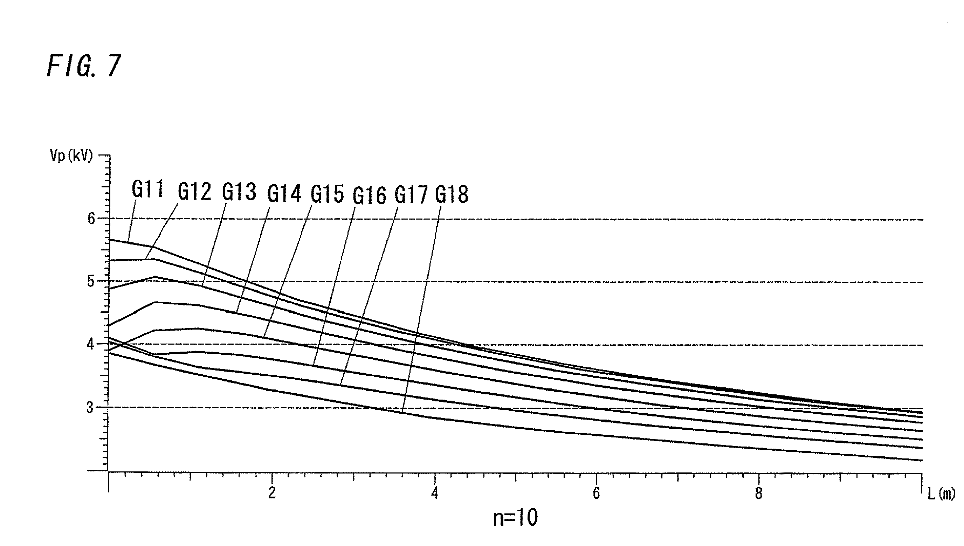

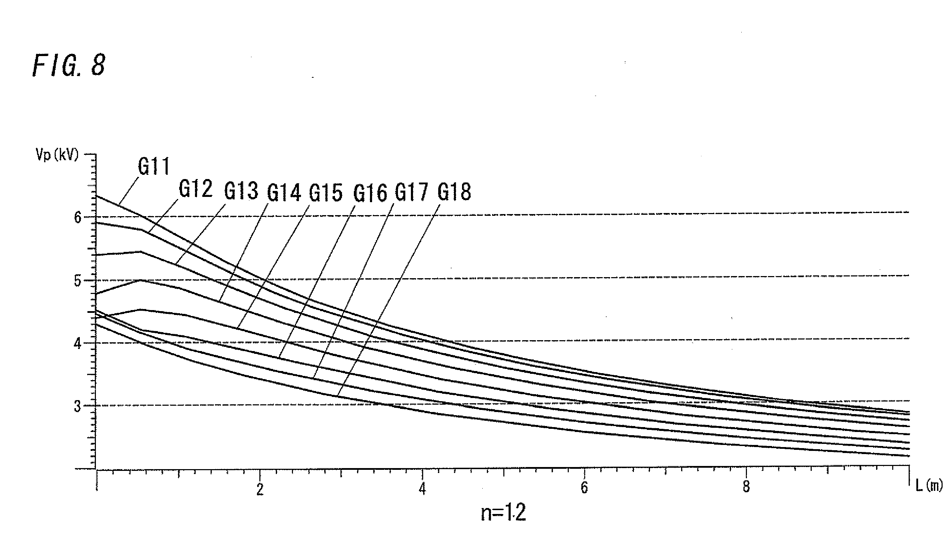

FIGS. 4 to 8 show graphs illustrating relations between the starting pulse value **Vp** and the output wire length **L,** respectively. In respective FIGS. 4 to 8, a lateral axis denotes the output wire length **L** [m], and a vertical axis denotes the starting pulse value **Vp** [kV]. FIG. 4 shows a variation of the output characteristics of the starting circuit **60** observed when varying a coupling coefficient **k** of the pulse transformer **61** with the turn ratio **n** of 4. Likewise, FIG. 5 shows the variation observed when varying the coupling coefficient **k** of the pulse transformer **61** with the turn ratio n of 6, and FIG. 6 shows the variation observed when varying the coupling coefficient **k** of the pulse transformer **61** with the turn ratio **n** of 8, and FIG. 7 shows the variation observed when varying the coupling coefficient **k** of the pulse transformer **61** with the turn ratio **n** of 10, and FIG. 8 shows the variation observed when varying the coupling coefficient **k** of the pulse transformer **61** with the turn ratio **n** of 12. Additionally, in respective FIGS. 4 to 8, graphs **G11, G12, G13, G14, G15, G16, G17,** and **G18** indicate the output characteristics with the coupling coefficients **k** of 0.800, 0.880, 0.928, 0.956, 0.974, 0,984, 0.990, and 0.998, respectively. Concerning instances respectively shown in FIGS. 4 to 8, the primary voltage **V611** of the pulse transformer **61** has the peak value **VN1** of about 600V.

In addition, the starting pulse value **Vp** can be considered as a sum of a fundamental oscillation voltage **Vpa** and a parasitic oscillation voltage **Vpb** (that is, **Vp=Vpa+Vpb).**

The fundamental oscillation voltage **Vpa** is a component caused by a resonant circuit constituted by the output capacitor **43,** the primary coil **611,** the series capacitor **63,** the parallel capacitor **65,** and a capacitance (hereinafter referred to as "wiring capacitance") **C83** of a stray-capacitor which is developed across the pair of the output wires **83.**

The parasitic oscillation voltage **Vpb** is a component caused by a resonant circuit which a capacitive component (hereinafter referred to as "parallel capacitive component") considered to be connected in parallel with the primary coil **611** and a leak inductance of the pulse transformer **61** constitute.

In respective FIGS. 4 to 8, the parasitic oscillation voltage **Vpb** is hardly seen in the starting pulse value indicated by the graph **G18**. That is, the graph **G18** indicates the fundamental oscillation voltage **Vpa.** Therefore, differences between each starting pulse value **Vp** indicated by the graphs **G11** to **G17** and the starting pulse value **Vp** indicated by the graph **G18** indicate the parasitic oscillation voltages **Vpb.**

For example, in the graph **G14** with the turn ratio **n** of 4, the starting pulse value **Vp** is about 3100V when the output wire length **L** is 0m. This starting pulse value **Vp** is considered to as the sum of the fundamental oscillation voltage **Vpa** of about 2600V and the parasitic oscillation voltage **Vpb** of about 500V. By contrast, a product of the peak value **VN1** (=600V) and the turn ratio **n** (=4) is 2400V. In other words, the starting pulse value **Vp** exceeds the product of the peak value **VN1** and the turn ratio **n.**

Consequently, in view of the available high pressure discharge lamp **90** having a standard range of the starting pulse **Vp,** the starting circuit **60** is designed to have the turn ratio n smaller than a central value **Vpm** (e.g. **Vpm**=4.5kV, when the range of the specified value is from 4.0kV to 5.0 kV) divided by the peak value **VN1 (=Vpm/VN1).** That is, the starting circuit **60** satisfies the following formula (2) wherein **N1** denotes the number of turns of the primary coil **611** and **N2** denotes the number of turns of the secondary coil **612.**

[Formula 6]

$$\frac{N2}{N1} < \frac{Vpm}{VN1} \qquad (2)$$

As apparent form FIGS. 4 to 8, the turn ratio **n (=N2/N1)** and the coupling coefficient **k** of the pulse transformer **61** changes the output characteristics of the starting circuit **60.**

In view of the above, in the high pressure discharge lamp lighting apparatus **10,** the turn ratio n and the coupling coefficient **k** are selected such that the starting circuit **60** has the above mountain-shaped output characteristics (the output characteristics of the starting circuit **60** become the above mountain-shaped output characteristics).

According to the aforementioned high pressure discharge lamp lighting apparatus of the present embodiment, in contrast to a situation where the starting pulse value **Vp** monotonically decreases as the length of the output wire **83** increases in a similar manner as seen in the conventional art, it is possible to decrease a width of variation in the starting pulse value **Vp** caused by varying the length of the output wire **83**. Therefore, it is possible to reduce an influence caused by the pair of the output wires **83**. Thus, the high pressure discharge lamp **90** can be turned on even if the pair of the output wires **83** is relatively long. Additionally, it is possible to prevent the starting pulse value **Vp** from becoming excessively high even if the pair of the output wires **83** is relatively short.

Especially, the high pressure discharge lamp lighting apparatus **10** utilizes the pulse transformer **61** to give the above mountain-shaped characteristics to the starting circuit **60**. Therefore, according to the high pressure discharge lamp lighting apparatus **10,** it is unnecessary to newly add circuits used for giving the above mountain-shaped characteristics to the starting circuit **60.**

It is noted here that the wiring capacitance **C83** gives rise to a certain influence on the parallel capacitive component (that is, an influence on the starting pulse value **Vp)** in much the same as is given by a capacitance of a capacitor (hereinafter referred to as "virtual capacitor") connected in series with the parallel capacitor **65** and in parallel with the primary coil **611.** The virtual capacitor has a capacitance of $n^2*C83$. Therefore, an increase of the turn ratio **n** exaggerates the decrease in the width of the starting pulse value **Vp** caused when the pair of the output wires **83** becomes long.

A primary factor of developing the parallel capacitive component includes the stray capacitance developed between the output wires **83** in the pair and the parallel capacitor **65**. Besides, the other factor includes the parasitic capacitances **C611** and **C612** respectively corresponding to the coils **611** and **612** of the pulse transformer **61,** and gives less influence relative to the stray capacitance developed between the output wires **83** in the pair and the parallel capacitor **65.**

When the wiring capacitance **C83** is assumed to be equivalent to the capacitance of the virtual capacitor, the capacitance of the parallel capacitive component is considered as a capacitance of a series circuit of the virtual capacitor and the parallel capacitor **65**. A frequency (hereinafter referred to as "fundamental oscillation frequency") **fa** of the fundamental oscillation voltage **Vpa** is expressed by the following formula (3). Further, a frequency (hereinafter referred to as "parasitic oscillation frequency") **fb** of the parasitic oscillation voltage **Vpb** is expressed by the following formula (4), wherein **LL** denotes the leak inductance (that is, an inductance component of the leak impedance) of the pulse transformer **61.**

[Formula 7]

$$fa \fallingdotseq \frac{1}{2\pi\sqrt{L611\times\left(\dfrac{C43\times C63}{C43+C63}+C65+n^2\times C83\right)}} \qquad (3)$$

$$fb \fallingdotseq \frac{1}{2\pi\sqrt{LL\times\left(\dfrac{n^2\times C83\times C65}{n^2\times C83+C65}\right)}} \qquad (4)$$

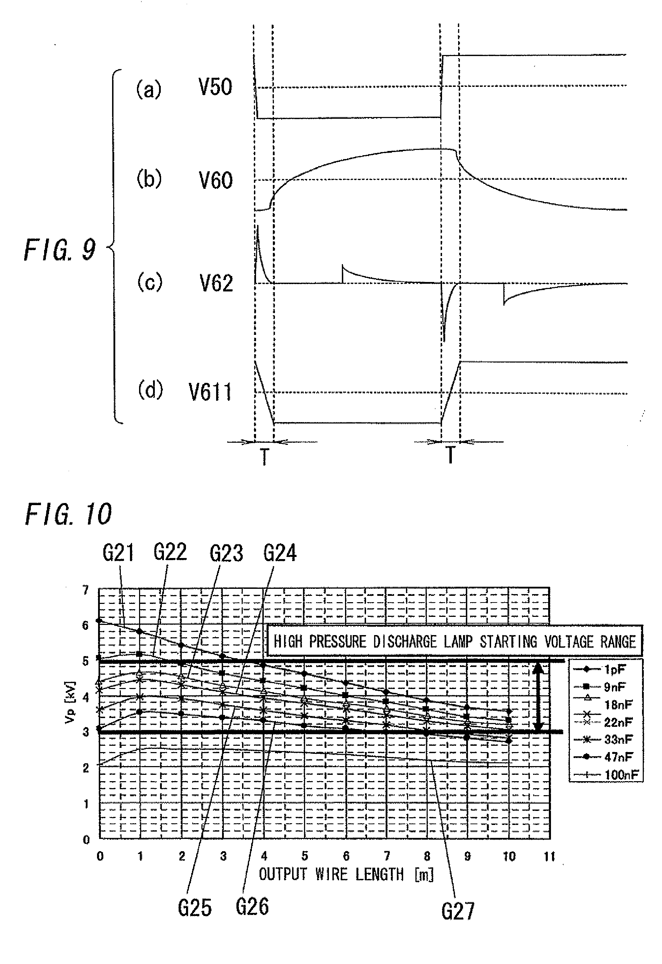

As shown in FIG. 9, it takes a time **T** (see FIG. 9, hereinafter referred to as "primary voltage rising time") to increase the primary voltage **V611** from 0 to the peak value **VN1** or to decrease the primary voltage **V611** from the peak value **VN1** to 0. The primary voltage rising time **T** is constant irrespective of the coupling coefficient **k.** Besides, in FIG. 9, (a) shows a time variation of the output voltage **V50** of the polarity reversion circuit **50.** In FIG. 9, (b) shows a time variation of the charging voltage **V63** of the series capacitor **63.** In FIG. 9, (c) shows a time variation of the voltage **V62** across the switching element **62.** In FIG. 9, (d) shows a time variation of the primary voltage **V611.**

The parasitic oscillation voltage **Vpb** has a local maximum point defined as a point in which the primary voltage rising time (primary voltage variation time) **T** and the parasitic oscillation frequency **fb** are satisfy a relation of **T=1/4fb.** A value of **1/4fb** monotonically increases with an increase of the wiring capacitance **C83** (that is, the output wire length **L).** Therefore, in order that the parasitic oscillation voltage **Vpb** has the local maximum point within a range (hereinafter referred to as "usable range") of the supposed output wire length **L,** the relation of **T>1/4fb1** need be satisfied. Besides, **fb1** denotes a parasitic oscillation frequency obtained when the output wire length **L** is the shortest within the usable range. The usable range is defined as a range of the length of the pair of the output wires **83** assumed to be actually used for connecting of the high pressure discharge lamp lighting apparatus **10** and the high pressure discharge lamp **90.**

In order to satisfy the relation of **T>1/4fb1,** it is sufficient that the leak inductance **LL** is adjusted by adjusting the coupling coefficient **k** by use of conventional techniques. When the parallel capacitive component obtained when the output wire length **L** is the shortest within the usable range is **Cx,** the relation of **T>1/4fb1** is represented as the following formula (5).

[Formula 8]

$$T > \frac{1}{2}\pi\sqrt{LL\times Cx} \qquad (5)$$

The starting pulse value **Vp** has a local maximum point within the usable range in a relationship with the output wire length L when an increase amount exceeds a decrease amount. The above increase amount is defined as a difference between the local maximum value of the parasitic oscillation voltage **Vpb** and the parasitic oscillation voltage **Vpb** obtained when the output wire length **L** is 0. The above decrease amount is defined as a difference between the fundamental oscillation voltage **Vpa** obtained when the output wire length **L** is 0 and the fundamental oscillation voltage **Vpa** obtained when the output wire length **L** has a value such that the parasitic oscillation voltage **Vpb** becomes the local maximum value. In order that the above increase amount exceeds the above decrease amount, it is sufficient that the turn ratio **n** and the coupling coefficient **k** are appropriately selected as mentioned in the above.

Also as apparent from FIGS. 4 to 8, the leak inductance **LL** decrease as the coupling coefficient **k** increases. Therefore, the local maximum point (the local maximum value of the starting pulse value **Vp**) moves right (moves toward a side in which the output wire length **L** becomes longer). Accordingly, it is possible to restrain an increase of the starting pulse value **Vp** caused by an increase of the output wire length **L.** Thus, the coupling coefficient is preferred to be increased when there is a possibility of an increase of the output wire length **L.**

Besides, the starting circuit **60** is configured to, while the output wire length **L** falls within the usable range, select .the starting pulse value **Vp** exceeding a starting voltage of the high pressure discharge lamp **90.** For example, it is assumed that the starting pulse value **Vp** necessitated for initiating the high pressure discharge lamp **90** falls within a range of 3.5kV to 5kV and the output wire length **L** falls within a range of 0m to 10m. In this situation, when the turn ratio n is 6 and the coupling coefficient **k** falls within a range of 0.980 to 0.990, the starting pulse value **Vp** is kept greater than the starting voltage within the usable range.

Additionally, the starting circuit **60** is preferred to be designed such that the certain value is not greater than the shortest output wire length **L** within the usable range. That is, when the shortest value of the output wire length **L** within the usable range is kept greater than the output wire length **L** at the local maximum point of the starting pulse value **Vp** (in other words, a specification or the like prohibits use of the pair of the output wires **83** shorter than the output wire length **L** at the local maximum point), the starting pulse value **Vp** monotonically decreases with an increase of the output wire length **L** within the usable range. When the output wire length **L** giving the local maximum point of the starting pulse voltage **Vp** falls within the usable range, it is necessary to check whether the starting pulse value **Vp** has the minimum value at either the longest value or the shortest value of the output wire length **L** within the usable range. In a situation where the shortest value of the output wire length **L** within the usable range is kept longer than the output wire length **L** at the local maximum point of the starting pulse value **Vp,** the starting pulse value **Vp** successfully has the maximum value when the output wire length **L** is the shortest value. In addition, the starting pulse value **Vp** successfully has the minimum value when the output wire length **L** is the longest value. Therefore, it is easy to obtain both the minimum value and the maximum value of the starting pulse value **Vp.**

Moreover, the starting pulse value **Vp** at the shortest value of the output wire length **L** within the usable range is preferred to be identical to the starting pulse value **Vp** at the longest value of the output wire length **L** within the usable range. With this arrangement, in contrast to a situation where the starting pulse value **Vp** at the shortest value of the output wire length **L** within the usable range is different from the starting pulse value **Vp** at the longest value of the output wire length **L** within the usable range, it is possible to decrease a width of variation in the starting pulse value **Vp** with relation to the output wire length **L** within the usable range. Therefore, it is possible to reduce a fluctuation of timing of lighting the high pressure discharge lamp **90**. For example, as indicated by the graph **G13** in FIG. 4, when the turn ratio **n** is 4 and the coupling coefficient **k** is 0.928, the starting pulse value **Vp** at the shortest value of the output wire length **L** within the usable range is approximately equal to the starting pulse value **Vp** at the longest value of the output wire length **L** within the usable range.

Actually, the high pressure discharge lamp **90** and the respective circuit parts have inherent fluctuations with respect to certain characteristics. Therefore, it is difficult to strictly adjust the starting pulse value **Vp** at the shortest value of the output wire length **L** within the usable range to the starting pulse value **Vp** at the longest value of the output wire length **L** within the usable range.

Accordingly, when it is impossible to adjust the starting pulse value **Vp** at the shortest value of the output wire length **L** within the usable range to the starting pulse value **Vp** at the longest value of the output wire length **L** within the usable range, a difference between the maximum value and the minimum value of the starting pulse value **Vp** is preferred to be kept not exceeding 500V. In other words, the starting circuit **60** is preferred to be designed such that the difference between the starting pulse value **Vp** obtained when the output wire length **L** is the shortest value within the usable range and the starting pulse value **Vp** obtained when the output wire length **L** is the longest value within the usable range does not exceed 500V.

With this arrangement, in contrast to a situation where the difference between the starting pulse value **Vp** obtained when the length of the output wire **83** is the shortest value within the usable range and the starting pulse value **Vp** obtained when the length of the output wire **83** is the longest value within the usable range exceeds 500V, it is possible to decrease a width of variation in the starting pulse value **Vp** with relation to the length of the output wire **83** within the usable range.

**(second embodiment)**

The high pressure discharge lamp lighting apparatus **10** has a circuit configuration similar to that of the first embodiment. Therefore, FIGS 1 and 9 are cited for an explanation of the high pressure discharge lamp lighting apparatus **10** of the present embodiment.

FIG. 10 shows a graph illustrating a relation between the starting pulse value **Vp** and the output wire length **L.** In FIG. 10, a lateral axis denotes the output wire length **L** [m], and a vertical axis denotes the starting pulse value **Vp** [kV]. In FIG. 10, graphs **G21** to **G27** indicate the output characteristics with the capacitances **C65** of the parallel capacitor 65 of 1 pF, 9nF, 18nF, 22nF, 33nF, 47nF, and 100nF, respectively. That is, FIG. 10 shows a variation of the output characteristics of the starting circuit **60** observed when varying the capacitance **C65** of the parallel capacitor **65.**

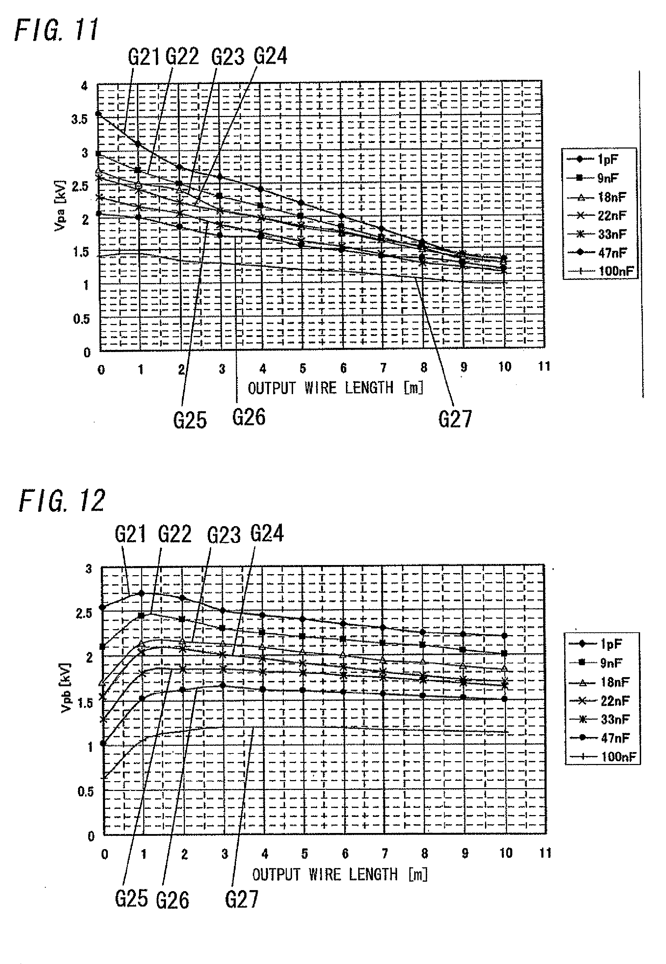

FIG. 11 shows a graph illustrating a relation between the fundamental oscillation voltage **Vpa** and the output wire length **L.** In FIG. 11, a lateral axis denotes the output wire length **L** [m], and a vertical axis denotes the fundamental oscillation voltage **Vpa** [kV].

FIG. 12 shows a graph illustrating a relation between the parasitic oscillation voltage **Vpb** and the output wire length **L.** In FIG. 12, a lateral axis denotes the output wire length **L** [m], and a vertical axis denotes the parasitic oscillation voltage **Vpb** [kV].

Also in FIGS. 11 and 12, in a similar fashion as FIG. 10, graphs **G21** to **G27** indicate the output characteristics with the capacitances **C65** of the parallel capacitor 65 of 1 pF, 9nF, 18nF, 22nF, 33nF, 47nF, and 100nF, respectively.

As apparent from the graphs shown in FIG. 10, the capacitance **C65** of the parallel capacitor **65** changes the output characteristics of the starting circuit **60.**

In view of this point, with respect to the high pressure discharge lamp lighting apparatus **10,** instead of the turn ratio **n** and the coupling coefficient **k** of the pulse transformer **61,** the capacitance **C65** of the parallel capacitor **65** is selected such that the starting circuit **60** has the above mountain-shaped output characteristics (the output characteristics of the starting circuit **60** become the above mountain-shaped output characteristics).

According to the aforementioned high pressure discharge lamp lighting apparatus of the present embodiment, in contrast to a situation where the starting pulse value **Vp** monotonically decreases as the length of the output wire **83** increases in a similar manner as seen in the conventional art, it is possible to decrease a width of variation in the starting pulse value **Vp** caused by varying the length of the output wire **83** in a similar manner as seen in the first embodiment. Therefore, it is possible to reduce an influence given by the output wires **83.** Thus, the high pressure discharge lamp **90** can be turned on even if the part of the output wires **83** is relatively long. Additionally, it is possible to prevent the starting pulse value **Vp** from becoming excessively high even if the pair of the output wires **83** is relatively short.

Especially, the high pressure discharge lamp lighting apparatus **10** utilizes the parallel capacitor 65 to give the above mountain-shaped characteristics to the starting circuit **60.** Therefore, according to the high pressure discharge lamp lighting apparatus **10,** it is unnecessary to newly add circuits used for giving the above mountain-shaped characteristics to the starting circuit **60.**

Also in the high pressure discharge lamp lighting apparatus **10** of the present embodiment, the local maximum point of the parasitic oscillation voltage **Vpb** is defined as a point in which the primary voltage rising time **T** (see FIG. 9) and the parasitic oscillation frequency **fb** are satisfy the relation of **T=1/4fb.** Therefore, in order that the parasitic oscillation voltage **Vpb** has the local maximum point within the usable range, the relation of **T>1/4fb1** need be satisfied. When the capacitance **n²\*C83** of the virtual capacitor obtained when the output wire length **L is** the shortest within a usable range is **Cx** and the capacitance **C65** of the parallel capacitor **65** is **Cp,** the relation of **T>1/4fb1** is represented as the following formula (6) by use of the above formula (4).

[Formula 9]

$$T > \frac{1}{2}\pi \sqrt{LL \times \left( \frac{Cx \times Cp}{Cx + Cp} \right)} \qquad (6)$$

When the increase amount exceeds the decrease amount, the starting pulse value **Vp** has the local maximum point with relation to the output wire length **L** within the usable range. In order that the above increase amount exceeds the above decrease amount, it is sufficient that the capacitance **C65** of the parallel capacitor **65** is appropriately selected as mentioned in the above.

The starting circuit **60** is configured such that the starting pulse value **Vp** falls within a desired range within the usable range. For example, it is assumed that the assumed output wire length L (that is, usable range) is from 0m to 10m and a range ("high pressure discharge lamp starting range") of the starting pulse value **Vp** necessitated for initiating the high pressure discharge lamp **90** is from 3.5kV to 5kV. In this situation, when a socket (not shown) configured to receive the high pressure discharge lamp **90** and the pair of the output wires **83** has a voltage resistance not less than 5kV, it is sufficient that the capacitance **C65** of the parallel capacitor **65** is selected from a range of 10nF to 22nF.

Besides, the high pressure discharge lamp lighting apparatus **10** of the present embodiment can be used in the lighting fixture **80** shown in FIG. 2, in a similar fashion as seen in the first embodiment. This point of view is applicable to the following third to fifth embodiments.

**(third embodiment)**

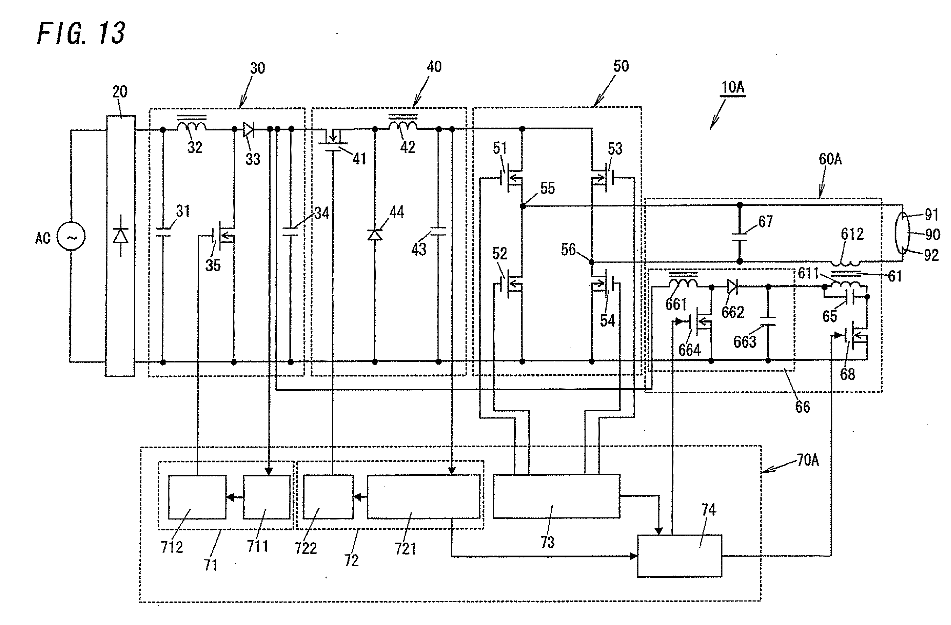

As shown in FIG. 13, the high pressure discharge lamp lighting apparatus **10A** of the present embodiment includes the rectification circuit **20,** the boost chopper circuit **30,** the step-down chopper circuit **40,** the polarity reversion circuit **50,** the starting circuit **60A,** and the control circuit **70A.**

The high pressure discharge lamp lighting apparatus **10A** is different from the high pressure discharge lamp lighting apparatus **10** of the second embodiment in that the starting circuit **60A** is configured to receive power from the boost chopper circuit **30** rather than the polarity reversion circuit **50.** Besides, the rectification circuit **20,** the boost chopper circuit **30,** the step-down chopper circuit **40,** and the polarity reversion circuit **50** are the same as those of the first

13

embodiment, and no explanations thereof are deemed necessary.

The starting circuit **60A** includes the pulse transformer **61,** the parallel capacitor 65, a starting power source **66,** a capacitor **67,** and a switching element **68.**

The starting power source **66** is a boost converter configured to raise the output voltage of the boost chopper circuit **30.** The starting power source **66** includes an inductor **661** which has its first end connected to the output terminal of the high voltage side of the boost chopper circuit **30.** The inductor **661** has its second end connected to an anode of a diode **662.** The diode **662** has its cathode connected to a first end of the output capacitor **663.** The output capacitor **663** has its second end connected to the output terminal of the low voltage side of the boost chopper circuit **30.** The switching element **664** has its first end connected to a junction of the inductor **661** and the diode **662.** The switching element **664** has its second end connected to a junction of the boost chopper circuit **30** and the output capacitor **663.** Both ends of the output capacitor 664 define output terminals of the starting power source **66,** respectively.

In the high pressure discharge lamp lighting apparatus **10A,** the primary coil **611** has its first end connected to the output terminal of a high voltage side of the starting power source **66.** Additionally, the primary coil **611** has its second end connected to the output terminal of a low voltage side of the starting power source **66** through the switching element **68.** Further, in the starting circuit **60,** the capacitor **67** has its first end connected to the first electrode **91** and has its second end connected to the second electrode **92** through the secondary coil **612.**

The control circuit **70A** includes a starting circuit control unit 74 in addition to the aforementioned boost control unit **71,** step-down control unit **72,** and polarity reversion drive unit **73.** The starting circuit control unit **74** is configured to control the respective switching elements **664** and **68.** For example, the starting circuit control unit **74** outputs drive signals to the switching elements **664** and **68,** respectively. Upon receiving the drive signal having a high level, the switching elements **664** and **68** are turned on. Upon receiving the drive signal having a low level, the switching elements **664** and **68** are turned off.

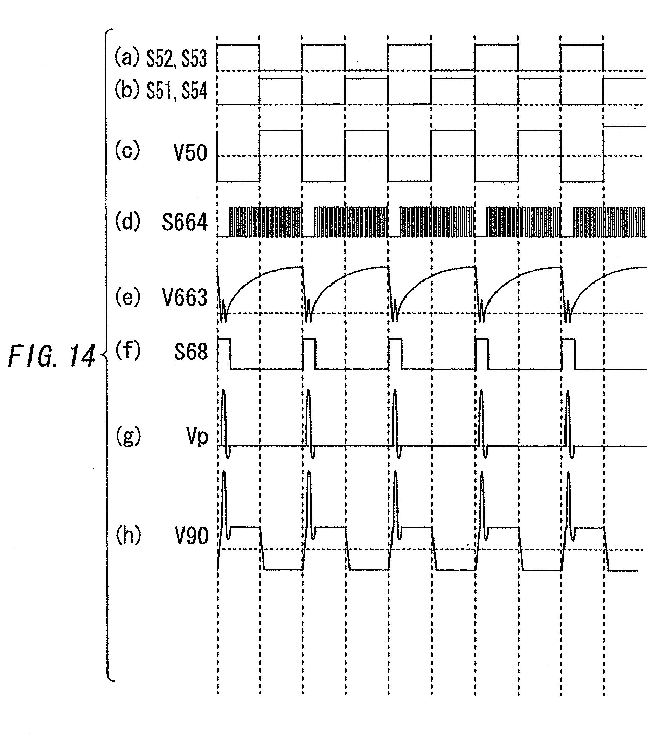

With reference to FIG. 14, an explanation is made to operation of the high pressure discharge lamp lighting apparatus **10A.** In FIG. 14, (a) shows a time variation of the drive signals **S52** and **S53** respectively output to the switching elements **52** and **53.** In FIG. 14, (b) shows a time variation of the drive signals **S51** and **S54** respectively output to the switching elements **51** and **54.** In FIG. 14, (c) shows a time variation of the output voltage **V50** of the polarity reversion circuit **50.** In FIG. 14, (d) shows a time variation of the drive signal **S664** output to the switching element **664.** In FIG. 14, (e) shows a time variation of a voltage (charging voltage) **V663** developed across the output capacitor **663.** In FIG. 14, (f) shows a time variation of the drive signal **S68** output to the switching element **68.** In FIG. 14, (g) shows a time variation of the starting pulse value **Vp.** In FIG. 14, (h) shows a time variation of the lamp voltage **V90.**

The starting circuit control unit **74** turns on the switching element **68** in synchronization with a timing at which the polarity reversion drive unit **73** turns on and off the switching elements **51** to **54** of the polarity reversion circuit **50.** For example, the starting circuit control unit **74** keeps the switching element **68** turned on only for a predetermined period beginning from the falling of the output voltage **V50** of the polarity reversion circuit **50.** The predetermined period is shorter than a half of a period of the output voltage **V50** of the polarity reversion circuit **50.**

During a period in which the switching element **68** is kept turned off, the starting circuit control unit **74** turns on and off the switching element **664** to allow the starting power source **66** to supply a DC power. Thereby, an output voltage (that is, the charging voltage **V633** of the output capacitor **663)** is gradually increased. Thereafter, the starting circuit control unit **74** turns off the switching element **664** and turns on the switching element **68.** Consequently, a voltage (pulse voltage) is applied across the primary coil **611** of the pulse transformer **61.** As a result, the secondary voltage **V612** is induced across the secondary coil **612,** and the starting pulse is applied across the pair of the electrodes **91** and **92** of the high pressure discharge lamp **90.**

With regard to the high pressure discharge lamp lighting apparatus **10,** when the capacitance **C65** of the parallel capacitor **65** has a large value such as 10nF, it is possible to reduce the influence of the output wire length **L on** the starting pulse value **Vp.** However, it is difficult to obtain the starting pulse value **Vp** which is necessitated for activating the high pressure discharge lamp **90.**

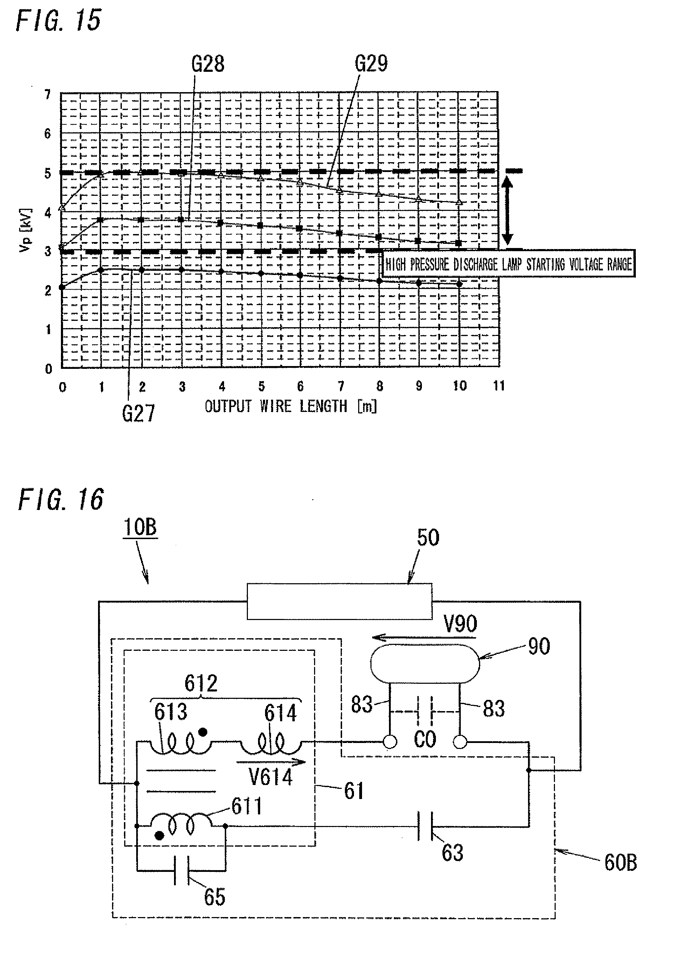

FIG. 15 shows a graph illustrating a relation between the starting pulse value **Vp** and the output wire length **L.** In FIG. 15, a lateral axis denotes the output wire length **L** [m], and a vertical axis denotes the starting pulse value **Vp** [kV].

In FIG. 15, as mentioned in the second embodiment, the graph **G27** indicates the relation in which the parallel capacitor **65** has the capacitance **C65** of 100nF. Likewise, each of graphs **G28** and **G29** indicates the relation in which the parallel capacitor **65** has the capacitance **C65** of 100nF.

The graph **G28** indicates the relation between the starting pulse value **Vp** and the output wire length **L** obtained when the peak value **VN1** of the primary voltage **V611** is 1.5 times greater than that of the graph **G27.** In other words, the charging voltage V663 of the output capacitor **663** of the starting power source **66** is selected to be 1.5 times greater than the break-over voltage **Vs-on** of the switching element **62** of the second embodiment. With this arrangement, it is possible to obtain the starting pulse value **Vp** which is necessitated for activating the high pressure discharge lamp **90** within the range of the output wire length **L** of 0m to 10m.

The graph **G29** indicates the relation between the starting pulse value **Vp** and the output wire length L obtained when the peak value **VN1** of the primary voltage **V611** is 2 times greater than that of the graph **G27.** In other words, the charging voltage **V663** of the output capacitor **663** of the starting power source **66** is more increased, and is selected to be 2 times greater than the break-over voltage **Vs-on** of the switching element **62.** With this arrangement, it is possible to obtain the starting pulse value **Vp** which is necessitated for activating the high pressure discharge lamp **90** when the output wire length **L** is more increased (the pair of the output wires **83** is more extended).

As described in the above, the high pressure discharge lamp lighting apparatus **10A** is enabled to increase the peak voltage **VN1** of the primary voltage **V611** of the pulse transformer **61** even if the capacitance **C65** of the parallel capacitor **65** increases, because of that the charging voltage **V663** of the output capacitor **663** is kept raised when the switching element **68** is turned on.

Thus, according to the high pressure discharge lamp lighting apparatus **10A** of the present embodiment, it is possible to reduce the influence caused by the output wire length **L** on the starting pulse value **Vp** yet to increase the starting pulse value **Vp.** As a result, it is possible to prevent a deterioration of the starting performance of the high pressure discharge lamp **90** resulting from an increase of the capacitance **C65** of the parallel capacitor **65.**

### (fourth embodiment)

As shown in FIG. 16, the high pressure discharge lamp lighting apparatus **10B** is different in a configuration of the starting circuit **60B** from the high pressure discharge lamp lighting apparatus **10** of the first embodiment. Although a part of the high pressure discharge lamp lighting apparatus is not illustrated in FIG. 16, the high pressure discharge lamp lighting apparatus **10B** includes the rectification circuit **20,** the boost chopper circuit **30,** the step-down chopper circuit **40,** the polarity reversion circuit **50,** and the control circuit **70** in a similar fashion as seen in the high pressure discharge lamp lighting apparatus **10** of the first embodiment.

The starting circuit **60B** is different from the starting circuit **60** of the first embodiment in that the starting circuit **60B** includes no switching element **62** and resistor **64.**

With respect to the fourth and fifth embodiments, the secondary coil **612** of the pulse transformer **61** is defined as a series circuit of an effective inductor **613** and a leak inductor **614.** The effective inductor **613** is defined as a virtual inductor corresponding to an effective inductance of the secondary coil **612.** The leak inductor **614** is defined as a virtual inductor corresponding to a leak inductance (that is, an inductance component of leak impedance) of the secondary coil **612.**

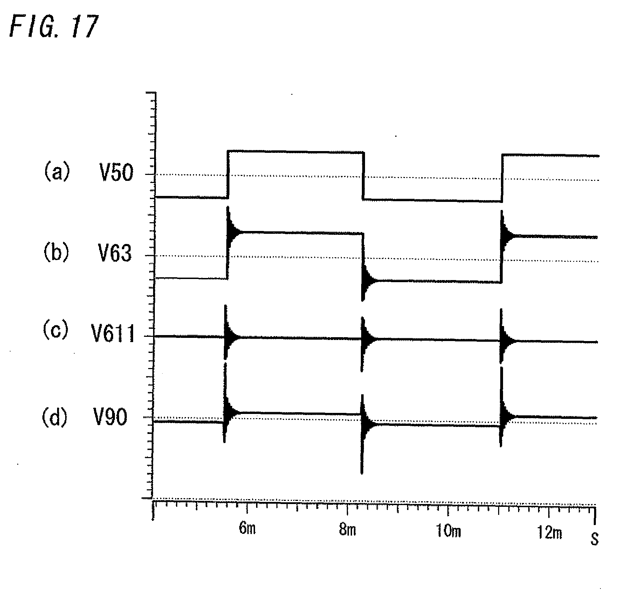

In FIG. 17, (a) shows a time variation of the output voltage **V50** of the polarity reversion circuit **50.** In FIG. 17, (b) shows a time variation of the charging voltage **V63** of the series capacitor **63.** In FIG. 17, (c) shows a time variation of the primary voltage **V611.** In FIG. 17, (d) shows a time variation of the lamp voltage **V90.**

As shown in FIG. 17, normally, the primary voltage **V611** has an absolute value smaller than an absolute value of the output voltage **V50** of the polarity reversion circuit **50.** However, the charging voltage **V63** of the series capacitor **63** is added to the primary voltage **V611** just after the switching elements **51** to **54** of the polarity reversion circuit **50** are switched. In this situation, the primary voltage **V611** has an absolute value 2 times greater than the absolute value of the output voltage **V50** of the polarity reversion circuit **50.**

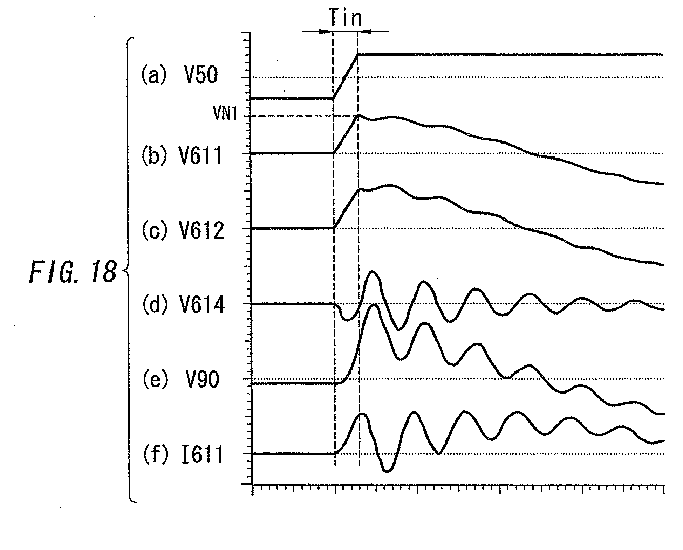

FIG. 18 shows an explanatory view illustrating operation of the high pressure discharge lamp lighting apparatus **10B** before and after the switching elements **51** to **54** of the polarity reversion circuit **50** are switched. In FIG. 18, (a) shows a time variation of the output voltage **V50** of the polarity reversion circuit **50.** In FIG. 18, (b) shows a time variation of the primary voltage **V611.** In FIG. 18, (c) shows a time variation of the secondary voltage **V612.** In FIG. 18, (d) shows a time variation of a voltage (hereinafter referred to as "parasitic oscillation voltage") **V614** considered as a voltage across the leak inductor **614.** In FIG. 18, (e) shows a time variation of the lamp voltage **V90.** In FIG. 18, (f) shows a time variation of a current **I611** flowing through the primary coil **611.**

As apparent from FIG. 18, it takes a certain time (rising time) T to increase the primary voltage **V611** from 0 to the peak value **VN1.** In the starting circuit **60B,** the rising time **T** is approximately identical to a time **Tin** necessitated for increasing the output voltage (that is, input voltage of the starting circuit **60B) V50** of the polarity reversion circuit **50** from 0 to a peak value.

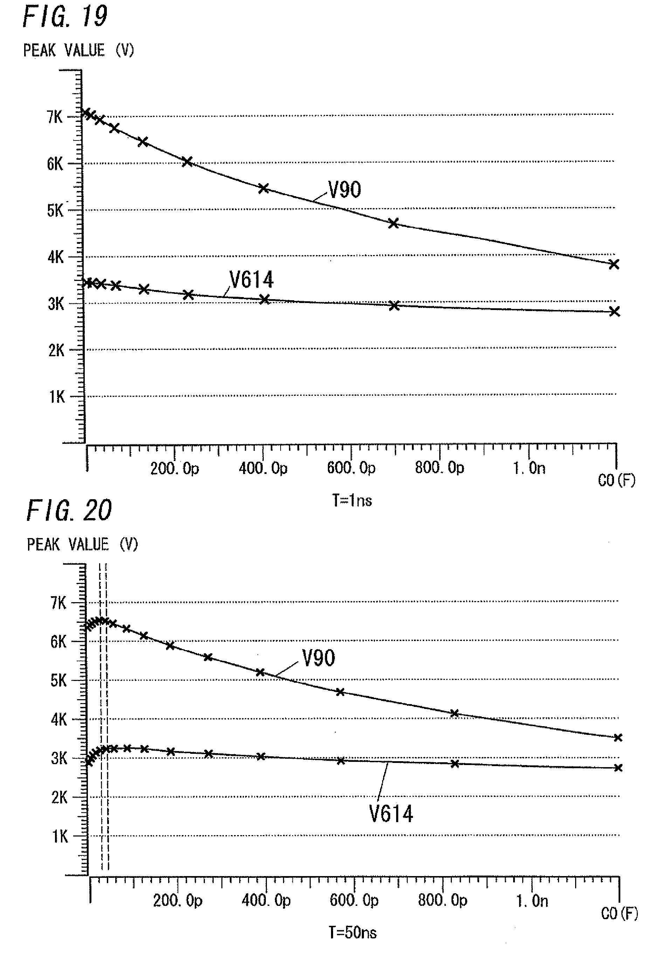

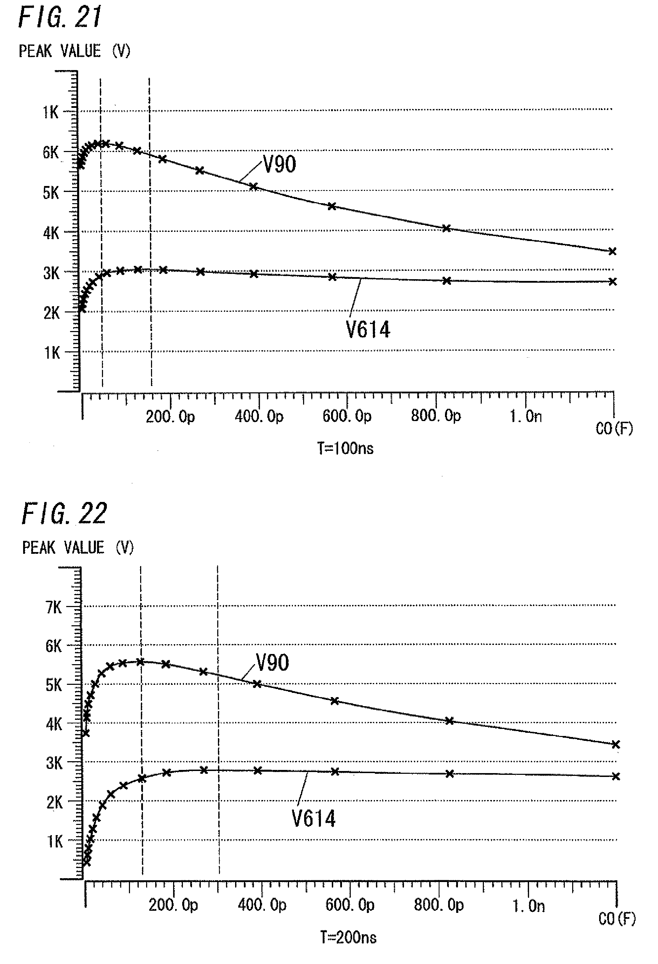

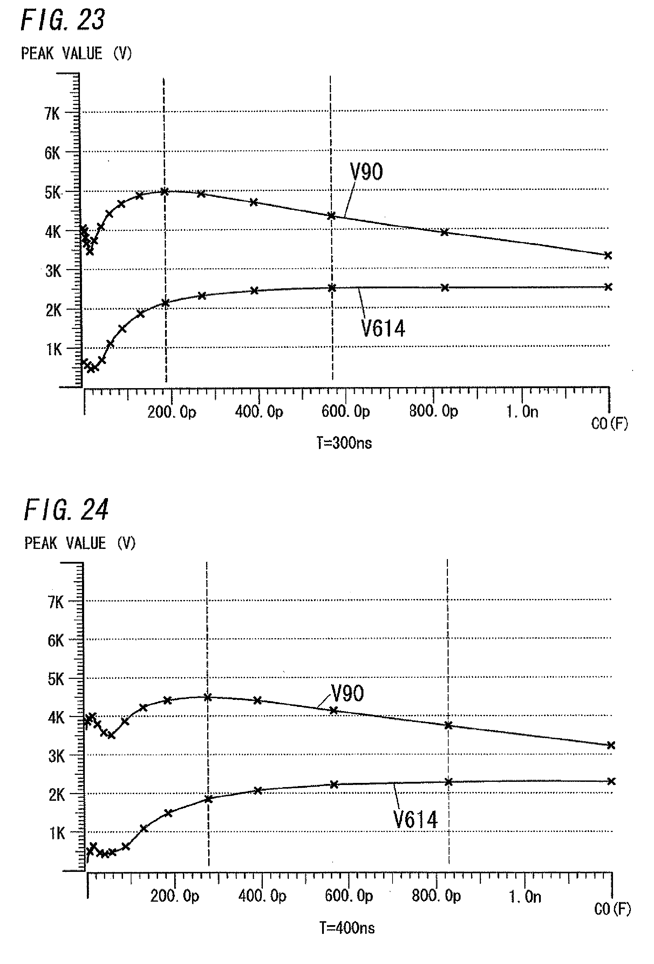

With respect to six instances having the different rising times **T,** FIGS.19 to 24 illustrate individual behaviors of the wiring capacitance **C83** as well as a peak value of the lamp voltage **V90** in relation to a peak (hereinafter referred to as "parasitic pulse value") of the parasitic oscillation voltage **V614.** FIGS. 19 to 24 show the relation with the rising time **T** of 1ns, 50ns, 100ns, 200ns, 300ns, and 400ns, respectively.

The wiring capacitance **C83** monotonically increases with an increase of the output wire length **L.** The peak value of the lamp voltage **V90** is corresponding to the starting pulse value **Vp.** Therefore, FIGS. 19 to 24 also illustrate individual behaviors of the starting pulse value **Vp** as well as the parasitic pulse value in relation to the output wire length **L.** As apparent from FIGS. 19 to 24, at least when the rising time **T** is 50ns or more, the starting pulse value **Vp** and the parasitic pulse value obviously increase as the output wire length **L** increases, and the starting pulse value **Vp** and the parasitic pulse value decrease when the output wire length **L** exceeds a certain value. In other words, each of the starting pulse **Vp** and the parasitic pulse value has a local maximum value (local maximum point).

The lamp voltage **V90** includes a component having its peak approximately monotonically decreased with an increase of the wiring capacitance **C83,** and the parasitic oscillation voltage **V614** superimposed on the component. Therefore, the starting pulse value **Vp** has a local maximum point positioned in left side (side in which the output wire length **L** and the wiring capacitance **C83** decrease) of a local maximum point of the parasitic pulse value. In order to give the above local maximum point to the starting pulse value **Vp** with the output wire length L falling in the usable range, the following condition need be satisfied. That is, the shortest value of the output wire length **L** within the usable range is required to be shorter than the output wire length L corresponding to the local maximum point of the parasitic pulse value.

When **T** is equivalent to **1/4fk,** the parasitic oscillation voltage **V614** has maximum amplitude. Besides, **fk** denotes a frequency (hereinafter referred to as "parasitic oscillation frequency") of the parasitic oscillation voltage **614,** and T denotes the rising time. A value of **1/4fk** monotonically increases with an increase of the wiring capacitance **C83** (that is, the output wire length **L).**

Therefore, for satisfying the above condition, **T** must exceed **1/4fk** when the output wire length **L** is the shortest within the usable range. The parasitic oscillation frequency **fk** can be represented by the following formula (7). In the following formula (7), **Cx** denotes a capacitance of a capacitive component assumed to be connected in parallel with the primary coil **611** of the pulse transformer **61,** and **LL** denotes the leak inductance of the pulse transformer **61.**

[Formula 10]

$$fk \fallingdotseq \frac{1}{2\pi\sqrt{LL \times Cx}} \qquad (7)$$

By use of the above formula (7), **T>1/4fk** can be represented by the following formula (8).

[Formula 11]

$$T > \frac{1}{2}\pi\sqrt{LL \times Cx} \qquad (8)$$

As described in the first embodiment, the capacitance **Cx** can be considered as a capacitance of the series circuit of the virtual capacitor and the parallel capacitor **65.** Additionally, a capacitance of the virtual capacitor can be considered as **n²*C83.**

Since the local maximum point of the starting pulse value **Vp** moves toward the right side (that is, side in which the output wire **83** becomes long) as the rising time **T** increases, it is possible to more restrain a decrease of the starting pulse value **Vp** caused by an increase of the output wire **83.** However, the overall starting pulse value **Vp** decreases with an increase of the rising time **T.** Therefore, in the instances of each of FIGS. 19 to 24, the rising time **T** is preferred to be around 300ns, for example.

As mentioned in the above, in the high pressure discharge lamp lighting apparatus **10B** of the present embodiment, the rising time **T** is selected such that the starting circuit **60B** has the above mountain-shaped characteristics.

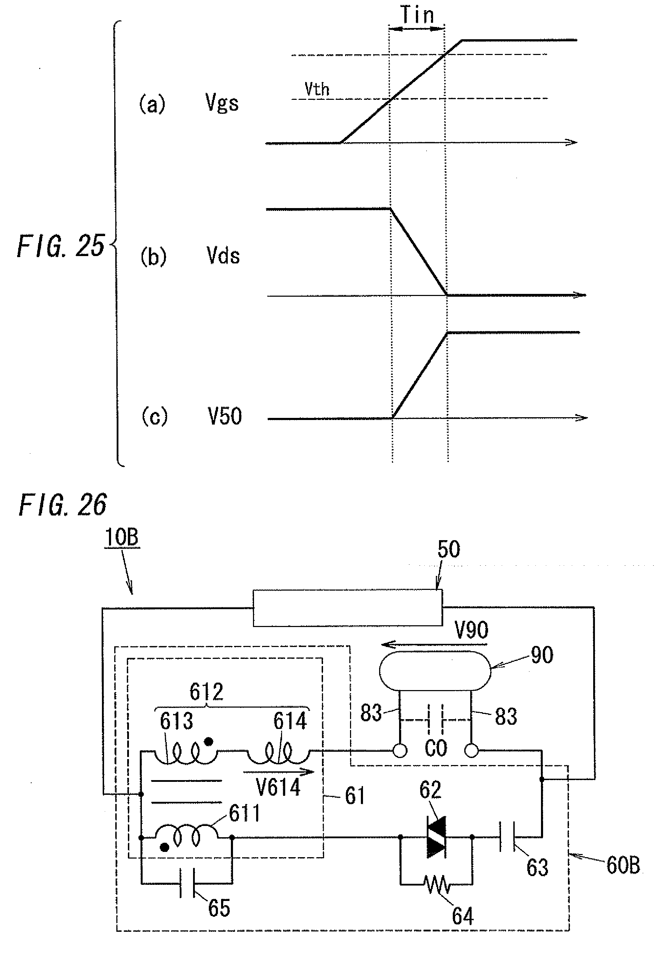

With respect to the high pressure discharge lamp lighting apparatus **10B,** the switching elements **51** to **54** of the polarity reversion circuit **50** are electric field effect transistors. With regard to the switching elements **51** to **54,** as shown in FIG. 25, while a gate-source voltage (hereinafter referred to as "gate voltage") **Vgs** is not less than a predetermined threshold voltage **Vth,** impedance between drain and source monotonically decreases down to about 0 with an increase of the gate voltage **Vgs.**

Therefore, in a situation where the switching elements **51** to **54** are turned on, if the gate voltage **Vgs** is gradually increased, a voltage (that is, drain-source voltage) **Vds** across the switching elements **51** to **54** is gradually decreased. Therefore, it is possible to gradually vary the output voltage **V50** of the polarity reversion circuit **50.** In other words, the time **Tin** (that is, the rising time **T)** can be adjusted by varying a speed at which the polarity reversion drive unit **73** increases the gate voltage **Vgs** of each of the switching elements **51** to **54.**

In the high pressure discharge lamp lighting apparatus **10B** of the present embodiment, the polarity reversion drive unit **73** is configured to gradually increase a potential applied to a gate of each of the switching elements **51** to **54** to adjust the rising time **T** to a predetermined time (time allowing the starting circuit **60** to have the above mountain-shaped characteristics). Additionally, in the high pressure discharge lamp lighting apparatus **10B** of the present embodiment, the control circuit **70** acts as a voltage increase means configured to increase the primary voltage **V611** of the pulse transformer **611** such that the rising time **T** becomes identical to the predetermined time.

FIG. 26 shows a modification of the high pressure discharge lamp lighting apparatus **10B** of the present embodiment. The starting circuit **60B** of the modification includes the parallel circuit of the switching element **62** and the resistor **64** in a similar manner as seen in the starting circuit **60** of the first embodiment.

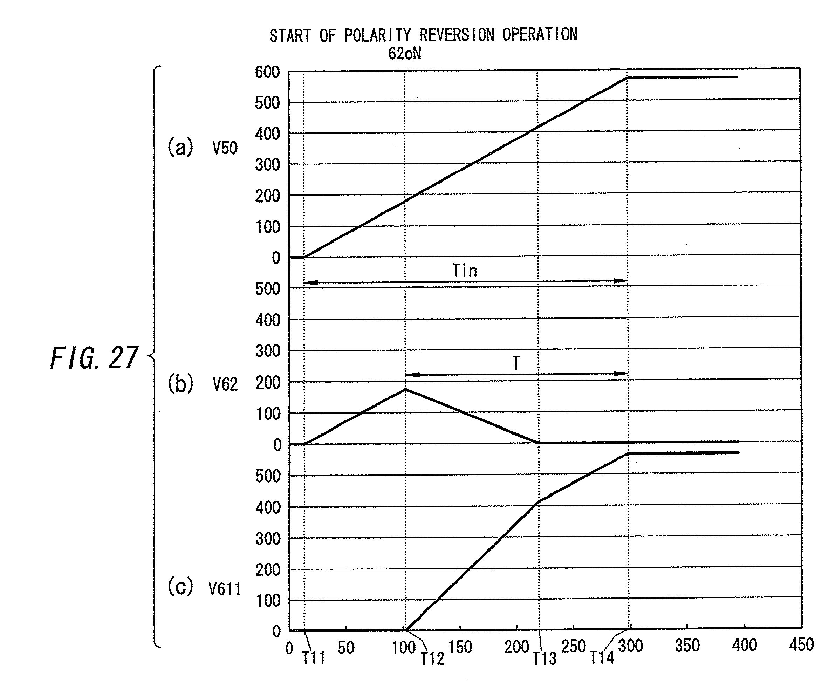

FIG. 27 is an explanatory view of operation of the modification. In FIG. 27, (a) shows a time variation of the output voltage **V50** of the polarity reversion circuit **50**. In FIG. 27, (b) shows a time variation of the voltage **V62** across the switching element **62**. In FIG. 27, (c) shows a time variation of the primary voltage **V611**. Besides, the time **T11** in FIG. 27 indicates a time at which the polarity reversion circuit **50** starts a polarity reversion operation.

As shown in FIG. 27, the primary voltage **V611** does not increase until the output voltage V50 reaches the break-over voltage of the switching element **62** (until the time **T12**). Therefore, the rising time **T** is shorter than the time **Tin**. Upon turning on, the switching element **62** gradually decreases its impedance down to a lowest value (about 0) in response to an increase of the output voltage **V50**. Additionally, a time (time **T13**) at which the impedance of the switching element **62** reaches the lowest value is prior to a time (time **T14**) at which the output voltage **V50** reaches its peak value. Whereby, during the first period **(T12 to T13)** within which the switching element **62** lowers its impedance to minimum, the primary voltage **V611** increases at a high rate than is made during a second period **(T13** to **T14)** which follows the first period and within which the polarity reversion circuit **50** raises its output voltage **V50** to its peak.

Besides, operation of gradually increasing the gate voltage **Vgs** may be performed only during the starting period of the high pressure discharge lamp **90**. Therefore, once after the step-down drive unit **722** determines that the high pressure discharge lamp **90** is turned on (that is, while the high pressure discharge lamp **90** is turned on), the polarity reversion drive unit **73** may accelerate the rising speed of the gate voltage **Vgs** than at the starting period. With this arrangement, it is possible to reduce a power consumption of the high pressure discharge lamp lighting apparatus **10B**.

**(fifth embodiment)**

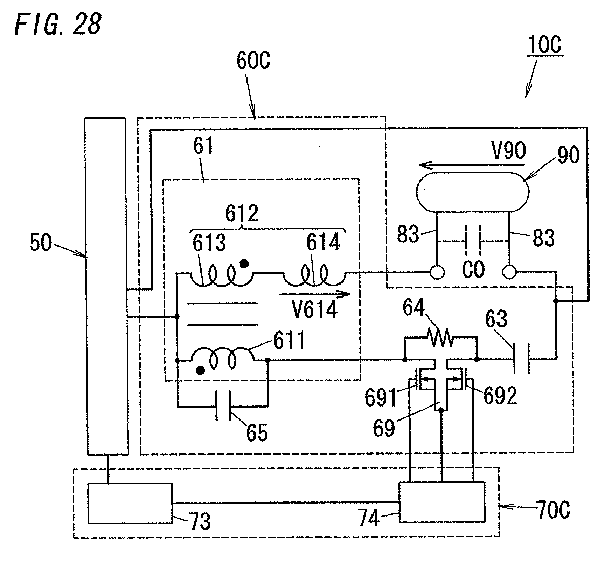

As shown in FIG. 28, the high pressure discharge lamp lighting apparatus **10C** of the present embodiment is different in the starting circuit **60C** and the control circuit **70C** from the fourth embodiment. Since the rectification circuit **20,** boost chopper circuit **30,** and step-down chopper circuit **40** of the present embodiment are the same as those of the first or fourth embodiment, and no explanation and drawings thereof are deemed necessary. Besides, the boost control unit **71** and step-down control unit **72** of the control circuit **70C** are not shown in FIG. 28.

The starting circuit **60C** is different from the starting circuit **60B** shown in FIG. 26 in that the starting circuit **60C** includes a variable impedance circuit **69** instead of the switching element **62**.

The variable impedance circuit **69** is a series circuit of two switching elements **691** and **692**. The switching element **691** has it source electrode connected to a source electrode of the switching element **692**. The switching element **691** has it drain electrode connected to the primary coil **611**. Thereby, the variable impedance circuit **69** is connected in series with the primary coil **611**. Further, the switching element **692** has it drain electrode connected to the series capacitor **63**.

The control circuit **70C** includes the starting control unit **74**. The starting control unit **74** is configured to turn on and off the switching elements **691** and **692** in synchronization with the operation of the polarity reversion drive unit **73**.

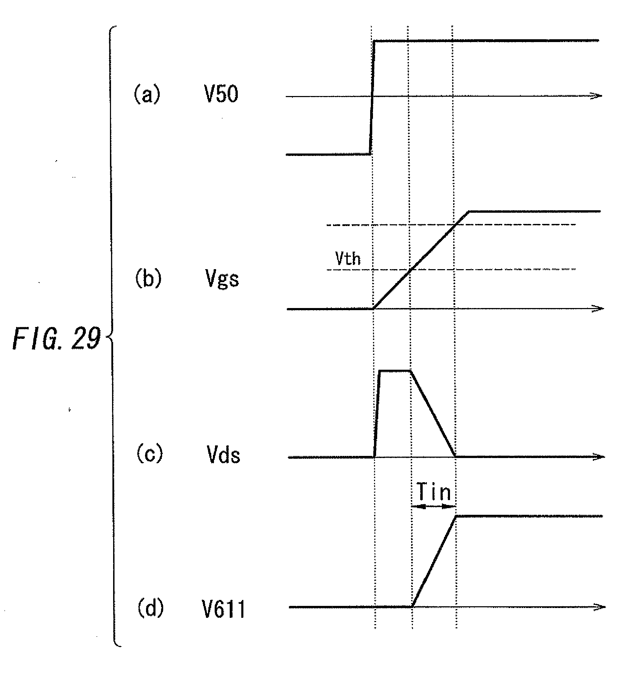

FIG. 29 is an explanatory view illustrating operation of the high pressure discharge lamp lighting apparatus **10C** of the present embodiment. In FIG. 29, (a) shows a time variation of the output voltage **V50** of the polarity reversion circuit **50**. In FIG. 29, (b) shows a time variation of the gate-source voltage **Vgs** concerning the respective switching elements **691** and **692**. In FIG. 29, (c) shows a time variation of the drain-source voltage **Vds** concerning the respective switching elements **691** and **692**. In FIG. 29, (d) shows a time variation of the primary voltage **V611**.

As shown in (b) of FIG. 14, each of the switching elements **691** and **692** has similar characteristics to the above switching elements **51** to **54**.

The starting control unit **74** starts on-operation at a timing at which the output voltage **V50** of the polarity reversion circuit **50** is reversed. The on-operation is defined as operation in which the starting control unit **74** gradually increases the gate-source voltage **Vgs** of each of the switching elements **691** and **692**. The on-operation is completed when the respective switching elements **691** and **692** are completely turned on (when the respective switching elements **691** and **692** have its impedance of approximately 0).

After completion of the on-operation, the starting control unit **74** turns off the respective switching elements **691** and **692** when the current flowing through the primary coil **611** becomes approximately 0.

In the high pressure discharge lamp lighting apparatus **10C,** the rising time **T** is varied depending on a speed at which the starting control unit **74** increases the gate-source voltages **Vgs** of the switching elements **691** and **692** during the on-operation.

Accordingly, the control circuit **70C** is configured to control the variable impedance circuit **69** so that the rising time **T** becomes equivalent to a predetermined time (time allowing the starting circuit **60C** to have the above mountain-shaped characteristics).

In the high pressure discharge lamp lighting apparatus **10C** of the present embodiment, differently from the fourth embodiment, it is unnecessary to adjust the speed of an increase of the gate voltage **Vgs** with relation to the switching elements **51** to **54** of the polarity reversion circuit **50**. Therefore, according to the high pressure discharge lamp lighting apparatus **10C,** in comparison with the fourth embodiment, it is possible to reduce power consumption at the switching elements **51** to **54** of the polarity reversion circuit **50**.

Besides, the timing of starting the on-operation need not be strictly identical to the timing of reversion of the output voltage **V50** of the polarity reversion circuit **50,** but may slightly delay from the timing of the reversion. Additionally, in the on-operation, both the gate-source voltages **Vgs** of the two switching elements **691** and **692** are not necessarily increased. For example, it is equally possible to give an increased gate-source voltage **Vgs** to a high-voltage-side one of the switching elements **691** and **692** in accordance with the polarity of the output voltage **V50** of the polarity reversion circuit **50.**

**Claims**

1. A high pressure discharge lamp lighting apparatus comprising:

   a power circuit including a pair of output terminals adapted to be respectively connected to a pair of electrodes of a high pressure discharge lamp, said power circuit being configured to apply an AC voltage for keeping said high pressure discharge lamp turned on across said pair of said output terminals; and
   a starting circuit configured to apply a starting pulse voltage across said pair of said electrodes of said high pressure discharge lamp,
   wherein said starting circuit is configured to have output characteristics of increasing the starting pulse voltage with an increase of a length of a pair of output wires used with connection of said high pressure discharge lamp, and of decreasing the starting pulse voltage when the length of said pair of said output wires exceeds a certain value.

2. A high pressure discharge lamp lighting apparatus as set forth in claim 1, wherein
   said starting circuit includes a pulse transformer, and is configured to apply, across said pair of said electrodes of said high pressure discharge lamp, a secondary voltage of said pulse transformer as the starting pulse voltage, said secondary voltage being obtained when a primary voltage of said pulse transformer is equivalent to a predetermined value, and
   said pulse transformer being configured to have a turn ratio and a coupling coefficient selected such that said starting circuit has said output characteristics.

3. A high pressure discharge lamp lighting apparatus as set forth in claim 2, wherein
   said high pressure discharge lamp lighting apparatus is configured to satisfy the following formula:

$$\frac{N2}{N1} < \frac{Vpm}{VN1}$$

   wherein
   N1 denotes the number of turns of a primary coil of said transformer, and
   N2 denotes the number of turns of a secondary coil of said transformer, and
   Vpm denotes a central value of a range of a specified value of the starting pulse voltage necessitated for starting said high pressure discharge lamp, and
   VN1 denotes the predetermined value.

4. A high pressure discharge lamp lighting apparatus as set forth in claim 3, wherein
   said high pressure discharge lamp lighting apparatus is configured to satisfy the following formula:

$$T > \frac{1}{2}\pi\sqrt{LL \times Cx}$$

wherein

Cx denotes capacitance of a capacitive component considered to be connected in parallel with said primary coil of said pulse transformer, and

LL denotes a leakage inductance of said pulse transformer, and

T denotes a time necessitated for increasing the primary voltage from 0 to the predetermined value during a starting period of said high pressure discharge lamp.

**5.** A high pressure discharge lamp lighting apparatus as set forth in claim 1, wherein
said starting circuit includes a pulse transformer, and a parallel capacitor connected across a primary coil of said pulse transformer, said starting circuit being configured to apply, across said pair of said electrodes of said high pressure discharge lamp, a secondary voltage of said pulse transformer as the starting pulse voltage, said secondary voltage being obtained when a primary voltage of said pulse transformer is equivalent to a predetermined value, and said parallel capacitor being configured to have a capacitance selected such that said starting circuit has said output characteristics.

**6.** A high pressure discharge lamp lighting apparatus as set forth in claim 5, wherein
said high pressure discharge lamp lighting apparatus is configured to satisfy the following formula:

$$T > \frac{1}{2}\pi\sqrt{LL \times \left(\frac{Cx \times Cp}{Cx + Cp}\right)}$$

wherein

Cp denotes capacitance of said parallel capacitor, and

Cx denotes capacitance of a virtual capacitor which is connected in series with said parallel capacitor and in parallel with said primary coil of said pulse transformer, and which is an equivalent circuit of a capacitive component between said pair of said output wires having the shortest length within a usable range, and

LL denotes a leakage inductance of said pulse transformer, and

T denotes a time necessitated for increasing the primary voltage from 0 to the predetermined value during a starting period of said high pressure discharge lamp.

**7.** A high pressure discharge lamp lighting apparatus as set forth in claim 1, wherein
said starting circuit includes a pulse transformer, said starting circuit being configured to apply, across said pair of said electrodes of said high pressure discharge lamp, a secondary voltage of said pulse transformer as the starting pulse voltage, said secondary voltage being obtained when a primary voltage of said pulse transformer is equivalent to a predetermined value,
said high pressure discharge lamp lighting apparatus comprising a voltage increasing means, and said voltage increasing means being configured to increase the primary voltage of said pulse transformer to adjust a time for increasing the primary voltage from 0 to the predetermined value such that said starting circuit has said output characteristics.

**8.** A high pressure discharge lamp lighting apparatus as set forth in claim 7, wherein
said voltage increasing means includes a variable impedance circuit connected in series with a primary coil of said pulse transformer, and a control circuit configured to control said variable impedance circuit and,
said control circuit being configured to control said variable impedance circuit to adjust the time for increasing the primary voltage from 0 to the predetermined value such that said starting circuit has said output characteristics.

**9.** A high pressure discharge lamp lighting apparatus as set forth in claim 7, wherein
said power circuit includes a DC power circuit configured to output a DC current, and an inverter circuit of a full-bridge type composed of electric field effect transistors,
said inverter circuit being configured to convert the DC current obtained from said DC power circuit into a square wave AC current of which polarity is reversed at a predetermined frequency, and provide the resultant square wave AC current to said high pressure discharge lamp and a primary coil of said pulse transformer,
said voltage increasing means including a control circuit configured to control said electric field effect transistor of said inverter circuit, and
said control circuit being configured to gradually increase a voltage applied to a gate of said electric field effect transistor in order to adjust the time for increasing the primary voltage from 0 to the predetermined value such that said starting circuit has said output characteristics.

10. A high pressure discharge lamp lighting apparatus as set forth in claim 7, wherein
said high pressure discharge lamp lighting apparatus is configured to satisfy the following formula:

$$T > \frac{1}{2}\pi\sqrt{LL \times Cx}$$

wherein
Cx denotes capacitance of a capacitive component considered to be connected in parallel with a primary coil of said pulse transformer, and
LL denotes a leakage inductance of said pulse transformer, and
T denotes a time necessitated for increasing the primary voltage from 0 to the predetermined value during a starting period of said high pressure discharge lamp.

11. A high pressure discharge lamp lighting apparatus as set forth in any one of claims 1, 2, 5, and 7, wherein
said starting circuit is configured to, while said pair of said output wires has a length within a usable range, output the starting pulse voltage exceeding a starting voltage of said high pressure discharge lamp.

12. A high pressure discharge lamp lighting apparatus as set forth in any one of claims 1, 2, 5, and 7, wherein
said starting circuit is designed such that a difference between the starting pulse voltage output when said pair of said output wires have the shortest length within the usable range and the starting pulse voltage output when said pair of said output wires have the longest length within the range does not exceed 500V.

13. A high pressure discharge lamp lighting apparatus as set forth in any one of claims 1, 2, 5, and 7, wherein
said starting circuit is designed such that the certain value is not greater than the shortest length of said pair of said output wires within a usable range.

14. A lighting fixture comprising said high pressure discharge lighting apparatus defined by any one of claims 1, 2, 5, and 7, and a main fixture body configured to carry said high pressure discharge lamp lighting apparatus.

FIG. 1

EP 2 273 853 A1

*FIG. 2*

FIG. 3

(a) S52, S53

(b) S51, S54

(c)  V50

(d)  V63

(e)  V62

(f)  Vp

(g)  V90

FIG. 4

n=4

EP 2 273 853 A1

EP 2 273 853 A1

FIG. 5

EP 2 273 853 A1

*FIG. 6*

Vp (kV)

G11 G12 G13 G14 G15 G16 G17 G18

n=8

L (m)

FIG. 7

EP 2 273 853 A1

## FIG. 8

n=12

FIG. 9

(a)　V50

(b)　V60

(c)　V62

(d)　V611

T　　　　T

FIG. 10

G21　G22　G23　G24

HIGH PRESSURE DISCHARGE LAMP STARTING VOLTAGE RANGE

7

6

5

4

3

2

1

0

$V_p$ [kV]

0　1　2　3　4　5　6　7　8　9　10　11

OUTPUT WIRE LENGTH [m]

G25　G26　　　　　G27

- 1pF
- 9nF
- 18nF
- 22nF
- 33nF
- 47nF
- 100nF

*FIG. 11*

*FIG. 12*

FIG. 13

EP 2 273 853 A1

FIG. 14 {

(a) S52, S53

(b) S51, S54

(c) V50

(d) S664

(e) V663

(f) S68

(g) Vp

(h) V90

*FIG. 15*

*FIG. 16*

*FIG. 17*

(a)  V50

(b)  V63

(c)  V611

(d)  V90

6m          8m          10m          12m     S

FIG. 18

(a) V50

VN1

(b) V611

(c) V612

(d) V614

(e) V90

(f) I611

Tin

FIG. 19

PEAK VALUE (V)

T=1ns

FIG. 20

PEAK VALUE (V)

T=50ns

## FIG. 21

PEAK VALUE (V)

T=100ns

## FIG. 22

PEAK VALUE (V)

T=200ns

## FIG. 23

PEAK VALUE (V)

V90

V614

T=300ns

## FIG. 24

PEAK VALUE (V)

V90

V614

T=400ns

*FIG. 25*

(a) Vgs

(b) Vds

(c) V50

*FIG. 26*

EP 2 273 853 A1

START OF POLARITY REVERSION OPERATION
62oN

*FIG. 27*

(a) V50

(b) V62

(c) V611

Tin

T

0  T11  50  100  T12  150  200  T13  250  T14  300  350  400  450

FIG. 28

FIG. 29

(a)  V50

(b)  Vgs

Vth

(c)  Vds

Tin

(d)  V611

## INTERNATIONAL SEARCH REPORT

| International application No. |
| --- |
| PCT/JP2009/057059 |

A. CLASSIFICATION OF SUBJECT MATTER
*H05B41/18*(2006.01)i

According to International Patent Classification (IPC) or to both national classification and IPC

B. FIELDS SEARCHED

Minimum documentation searched (classification system followed by classification symbols)
H05B41/18

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho  1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2007-173121 A  (Matsushita Electric Works,<br>Ltd.),<br>05 July, 2007 (05.07.07),<br>Fig. 1<br>(Family: none) | 1,14<br>2-13 |
| A | JP 2007-236140 A  (Toshiba Lighting & Technology<br>Corp.),<br>13 September, 2007 (13.09.07),<br>Par. Nos. [0050], [0051]<br>(Family: none) | 1-14 |
| A | JP 2007-52977 A  (Osram-Melco Ltd.),<br>01 March, 2007 (01.03.07),<br>Par. Nos. [0008] to [0018]<br>& EP 1916882 A1        & WO 2007/020776 A1<br>& KR 10-2008-0036150 A  & CN 101243729 A | 1-14 |

| ☒ | Further documents are listed in the continuation of Box C. | ☐ | See patent family annex. |

| * | Special categories of cited documents: |
| --- | --- |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>01 June, 2009 (01.06.09) | Date of mailing of the international search report<br>09 June, 2009 (09.06.09) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/057059

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-110381 A (Matsushita Electric Works, Ltd.), 12 April, 2002 (12.04.02), Claim 5 (Family: none) | 1-14 |
| A | JP 5-283180 A (Toshiba Lighting & Technology Corp.), 29 October, 1993 (29.10.93), Par. Nos. [0013] to [0015] (Family: none) | 1-14 |

Form PCT/ISA/210 (continuation of second sheet) (April 2007)

**EP 2 273 853 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63150891 A